(19) Europäisches Patentamt
European Patent Office
Office européen des brevets

(11) **EP 4 657 227 A1**

(12) **EUROPEAN PATENT APPLICATION**
published in accordance with Art. 153(4) EPC

(43) Date of publication:
**03.12.2025 Bulletin 2025/49**

(51) International Patent Classification (IPC):
***G06F 3/04845*** (2022.01)

(21) Application number: **24847555.0**

(52) Cooperative Patent Classification (CPC):
**G06F 3/0481; G06F 3/04845; G06F 3/04847; G06T 7/11**

(22) Date of filing: **29.02.2024**

(86) International application number:
**PCT/CN2024/079319**

(87) International publication number:
**WO 2025/025588 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.08.2023  CN 202310972715**

(71) Applicant: **Honor Device Co., Ltd.**
**Shenzhen, Guangdong 518040 (CN)**

(72) Inventor: **ZHANG, Congfei**
**Shenzhen, Guangdong 518040 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **SCREEN LOCKING IMAGE DISPLAY METHOD, ELECTRONIC DEVICE, AND READABLE STORAGE MEDIUM**

(57)     This application discloses a method for displaying a lock screen image, an electronic device, and a readable storage medium, and belongs to the field of terminal technologies. The method is applied to the electronic device, and includes: The electronic device displays a first lock screen in response to a screen-on operation, where the first lock screen includes: a first image, a system time indicator displayed on the first image, and a main image partially blocking the system time indicator; and the electronic device displays a second lock screen in response to a rotation operation on the electronic device, where the second lock screen includes: a second image, the system time indicator displayed on the second image, and the main image partially blocking the system time indicator. Because a relative position between the main image and the system time indicator does not change before and after the electronic device is rotated, display effect of a depth-of-field image is ensured before and after a display screen is rotated, and display aesthetics of the depth-of-field image is improved.

1401. Set, in response to a first setting operation, an original image selected in the first setting operation as a lock screen image

1402. Determine a first image and a second image based on a size of a display screen and the original image

1403. Store the first image as a lock screen image corresponding to a first screen display state, and store the second image as a lock screen image corresponding to a second screen display state

1404. An electronic device displays a first lock screen in response to a screen-on operation

1405. The electronic device displays a second lock screen in response to a rotation operation on the electronic device

FIG. 14

## Description

This application claims priority to Chinese Patent Application No. 202310972715.2, filed with the National Intellectual Property Administration on August 3, 2023 and entitled "METHOD FOR DISPLAYING LOCK SCREEN IMAGE, ELECTRONIC DEVICE, AND READABLE STORAGE MEDIUM", which is incorporated herein by reference in its entirety.

## TECHNICAL FIELD

This application relates to the field of terminal technologies, and in particular, to a method for displaying a lock screen image, an electronic device, and a readable storage medium.

## BACKGROUND

The lock screen image is an image displayed on a lock screen. For example, when an electronic device is set with a lock screen password, a lock screen image is displayed on a lock screen when the screen of the electronic device is reactivated following deactivation. With the rapid development of terminal technologies, manners of displaying a lock screen image of an electronic device are increasingly diversified, for example, including, but not limited to, a static lock screen image, a dynamic lock screen image, and a magazine lock screen image.

## SUMMARY

This application provides a method for displaying a lock screen image, an electronic device, and a readable storage medium, to resolve a related-technology problem that display effect of a depth-of-field image is poor after screen rotation. The technical solutions are as follows.

According to a first aspect, a method for displaying a lock screen image is provided, and the method is applied to an electronic device and includes:

The electronic device displays a first lock screen in response to a screen-on operation, where the first lock screen includes: a first image, a system time indicator displayed on the first image, and a main image partially blocking the system time indicator; and

the electronic device displays a second lock screen in response to a rotation operation on the electronic device, where the second lock screen includes: a second image, the system time indicator displayed on the second image, and the main image partially blocking the system time indicator, where

a first position of the main image relative to the system time indicator in the first lock screen is the same as a second position of the main image relative to the system time indicator in the second lock screen.

In this way, after the electronic device is rotated, because the first position of the main image relative to the system time indicator in the first lock screen is the same as the second position of the main image relative to the system time indicator in the second lock screen, display effect of the lock screen image is ensured, and display aesthetics of the lock screen image is improved.

In an example of this application, before the electronic device displays a first lock screen in response to a screen-on operation, the method further includes:

setting, in response to a first setting operation, an original image selected in the first setting operation as a lock screen image;

determining the first image and the second image based on a size of a display screen of the electronic device and the original image; and

storing the first image as a lock screen image corresponding to a first screen display state, and storing the second image as a lock screen image corresponding to a second screen display state, where the first screen display state and the second screen display state are corresponding display states of the display screen before and after being rotated.

In this way, the first image and the second image are stored, and when the first image or the second image needs to be used subsequently, a needed depth-of-field image can be quickly obtained, thereby improving image display efficiency.

In an example of this application, a length of the display screen in a horizontal direction is less than a width of the display screen in a vertical direction, the original image is an image of a depth-of-field image theme, a shape of the original image is a square, a side length of the original image is the same as a longest side of the display screen, and the depth-of-field image theme is an image theme of the electronic device; and

the determining the first image and the second image based on a size of a display screen of the electronic device and the original image includes:

when the display screen is in the first screen display state, performing center cropping on the original image, to obtain the first image;

determining coordinate information of a first cropping area of the original image based on the size of the display screen, where the first cropping area is aligned with a top of the original image, and a size of the first cropping area is the same as a size of the display screen in the second screen display state; and

cropping the original image based on the coordinate information of the first cropping area, to obtain the second image.

In this way, the first cropping area is aligned with the top of the original image, and the size of the first cropping area is the same as the size of the display screen in the second screen display state, thereby ensuring that a relative position between the highest point of the main image and the system time indicator does not change in different display states of the display screen, thereby improving display effect of the depth-of-field image.

In an example of this application, a length of the display screen in a horizontal direction is greater than a width of the display screen in a vertical direction, the original image is an image of a depth-of-field image theme, a shape of the original image is a square, a side length of the original image is the same as a longest side of the display screen, and the depth-of-field image theme is an image theme of the electronic device; and
the determining the first image and the second image based on a size of a display screen of the electronic device and the original image includes:

when the display screen is in the first screen display state, determining coordinate information of a second cropping area of the original image based on the size of the display screen, where the second cropping area is aligned with a top of the original image, and a size of the second cropping area is the same as a size of the display screen in the first screen display state;
cropping the original image based on the coordinate information of the second cropping area, to obtain the first image; and
cropping the original image based on the size of the display screen in a center cropping manner, to obtain the second image, where a size of the second image is the same as a size of the display screen in the second screen display state.

In this way, different cropping manners are used when the display screen is in different sizes. This improves image cropping flexibility, and enables cropping to be more targeted. In addition, when the display screen is in different display states, the relative position between the highest point of the main image and the system time indicator does not change, thereby improving display effect of the depth-of-field image.

In an example of this application, a shape of the display screen is not a square, and the original image is an image in a gallery of the electronic device; and
the determining the first image and the second image based on a size of a display screen of the electronic device and the original image includes:

determining the first image corresponding to the original image based on the size of the display screen, where a size of the first image is the same as a size of the display screen in the first screen display state;

dividing a long side of the display screen by a short side of the display screen, to obtain enlargement times of the first image;
multiplying the enlargement times by a first distance, to obtain a second distance between a highest point of the main image in the enlarged first image and a top side of the enlarged first image in a vertical direction, where the first distance is a distance between a highest point of the main image in the first image and a top side of the first image in a vertical direction; and
cropping the enlarged first image based on the first distance, the size of the display screen, and the second distance, to obtain the second image, where a size of the second image is the same as a size of the display screen in the second screen display state.

In this way, the enlarged first image is cropped based on the first distance and the second distance, to ensure that when the second image obtained through cropping is displayed on the display screen in the second screen display state, the relative position between the highest point of the main image in the second image and the system time indicator does not change, thereby improving display effect of the depth-of-field image.

In an example of this application, the cropping the enlarged first image based on the first distance, the size of the display screen, and the second distance, to obtain the second image includes:

subtracting the first distance from the second distance, to obtain a first difference;
determining coordinate information of a third cropping area in the enlarged first image based on the first difference and the size of the display screen, where a size of the third cropping area is the same as the size of the display screen in the second screen display state; and
cropping the enlarged first image based on the coordinate information of the third cropping area, to obtain the second image.

In this way, the coordinate information of the third cropping area is determined based on the first difference, so that the electronic device crops the enlarged first image more accurately, that is, the size of the obtained second image is more accurate. This ensures that the relative position between the highest point of the main image in the second image and the system time indicator does not change, and improves display effect of the depth-of-field image.

In an example of this application, a shape of the display screen is not a square, and the original image is an image in a gallery of the electronic device; and
the determining the first image and the second image based on a size of a display screen of the electronic device and the original image includes:

determining the first image corresponding to the original image based on the size of the display screen, where a size of the first image is the same as a size of the display screen in the first screen display state;

dividing a short side of the display screen by a long side of the display screen, to obtain reduction times of the first image;

multiplying the reduction times by a first distance, to obtain a third distance between a highest point of the main image in the reduced first image and a top side of the reduced first image in a vertical direction, where the first distance is a distance between a highest point of the main image in the first image and a top side of the first image in a vertical direction; and

cropping the first image based on the reduction times, the third distance, the size of the display screen, and the first distance, to obtain the second image, where an enlarged size of the second image when displayed is the same as a size of the display screen in the second screen display state.

In this way, the first image is cropped based on the reduction times of the first image, and the first image does not need to be enlarged during a cropping process. This reduces operating steps, and improves cropping efficiency.

In an example of this application, a shape of the display screen is a square, and the original image is an image in a gallery of the electronic device; and
the determining the first image and the second image based on a size of a display screen of the electronic device and the original image includes:

determining the first image corresponding to the original image based on the size of the display screen; and
determining the first image as the second image.

In this way, when the shape of the display screen is a square, the first image is directly determined as the second image without cropping again, thereby improving efficiency of determining the depth-of-field image.

In an example of this application, that the electronic device displays a second lock screen in response to a rotation operation on the electronic device includes:

replacing, in response to the rotation operation on the electronic device, the first image with the second image; and
rotating the second image.

In this way, the first image is replaced with the second image, to display the lock screen image in a more targeted manner, and improve display aesthetics of the lock screen image on the lock screen.

In an example of this application, that a first position of the main image relative to the system time indicator in the first lock screen is the same as a second position of the main image relative to the system time indicator in the second lock screen refers to: a fourth distance from a highest point of the main image to a top side of the system time indicator in the first lock screen is the same as a fifth distance from a highest point of the main image to a top side of the system time indicator in the second lock screen.

In this way, the fourth distance from the highest point of the main image to the top side of the system time indicator in the first lock screen is the same as the fifth distance from the highest point of the main image to the top side of the system time indicator in the second lock screen, so that after the display screen is rotated, display effect of the lock screen can also be ensured, and display aesthetics of the lock screen is improved.

In an example of this application, the method further includes:

setting a third image as a lock screen image in response to a second setting operation; and
displaying a third lock screen in response to the screen-on operation, where the third lock screen includes the third image and the system time indicator displayed on an upper layer of the third image.

In this way, different images are set as lock screen images, thereby improving personalization of the lock screen.

According to a second aspect, an electronic device is provided. A structure of the electronic device includes a processor and a memory. The memory is configured to: store a program for supporting the electronic device in performing the method for displaying a lock screen image provided in the first aspect, and store data for implementing the method for displaying a lock screen image according to the first aspect. The processor is configured to execute the program stored in the memory. The electronic device may further include a communication bus, and the communication bus is configured to establish a connection between the processor and the memory.

According to a third aspect, a computer-readable storage medium is provided. The computer-readable storage medium stores instructions, and the instructions, when run on a computer, cause the computer to perform the method for displaying a lock screen image according to the first aspect.

According to a fourth aspect, a computer program product including instructions is provided. The instructions, when run on a computer, cause the computer to perform the method for displaying a lock screen image according to the first aspect.

Technical effects achieved in the second aspect, the third aspect, and the fourth aspect are similar to technical effects achieved by corresponding technical means in the first aspect, and are not described herein again.

## BRIEF DESCRIPTION OF DRAWINGS

FIG. 1 is a schematic diagram of a depth-of-field lock screen image according to an example embodiment;
FIG. 2A and FIG. 2B are a schematic diagram of an application scenario according to an example embodiment;
FIG. 3A and FIG. 3B are a schematic diagram of another application scenario according to an example embodiment;
FIG. 4A, FIG. 4B, FIG. 4C, FIG. 4D, FIG. 4E, and FIG. 4F are a schematic diagram of another application scenario according to an example embodiment;
FIG. 5A, FIG. 5B, FIG. 5C, and FIG. 5D are a schematic diagram of another application scenario according to an example embodiment;
FIG. 6A, FIG. 6B, FIG. 6C, FIG. 6D, and FIG. 6E are a schematic diagram of another application scenario according to an example embodiment;
FIG. 7 is a schematic diagram of a software architecture of an electronic device according to an example embodiment;
FIG. 8 is a schematic diagram of a framework of displaying a lock screen image according to an example embodiment;
FIG. 9 is a schematic flowchart of initialization processing of displaying a lock screen image according to an example embodiment;
FIG. 10 is a schematic flowchart of adding a user-defined depth-of-field lock screen image to a magazine lock screen list according to an example embodiment;
FIG. 11 is a schematic flowchart of adding a theme depth-of-field lock screen image to a magazine lock screen list according to an example embodiment;
FIG. 12 is a schematic flowchart of updating a background image according to an example embodiment;
FIG. 13 is a schematic flowchart of updating a foreground image according to an example embodiment;
FIG. 14 is a schematic flowchart of a method for displaying a lock screen image according to an example embodiment;
FIG. 15 is a schematic diagram of a process of obtaining a second image through cropping according to an example embodiment;
FIG. 16 is a schematic diagram of another process of obtaining a second image through cropping according to an example embodiment;
FIG. 17 is a schematic diagram of another process of obtaining a second image through cropping according to an example embodiment;

FIG. 18A, FIG. 18B, FIG. 18C, FIG. 18D, and FIG. 18E are a schematic flowchart of another method for displaying a lock screen image according to an example embodiment; and
FIG. 19 is a schematic diagram of a structure of an electronic device according to an example embodiment.

## DESCRIPTION OF EMBODIMENTS

To make the objectives, technical solutions, and advantages of this application clearer, implementations of this application are further described in detail below with reference to the accompanying drawings.

It should be understood that "a plurality of" mentioned in this application means two or more. In descriptions of this application, unless otherwise specified, "/" means "or". For example, A/B may represent A or B. In this specification, "and/or" describes only an association relationship for describing associated objects and indicates that three relationships may exist. For example, A and/or B may represent the following three cases: only A exists, both A and B exist, and only B exists. In addition, for ease of describing the technical solutions in this application clearly, the words such as "first" and "second" are used to distinguish same or similar items with basically same functions and roles. A person skilled in the art may understand that the words such as "first" and "second" do not limit a quantity or an execution sequence, and the words such as "first" and "second" do not indicate a definite difference.

Referring to "one embodiment", "some embodiments", or the like described in the specification of this application means that a specific characteristic, structure, or feature described in combination with this embodiment is included in one or more embodiments of this application. Therefore, statements "in an embodiment", "in some embodiments", "in other embodiments", "in some other embodiments", and the like appearing in different parts of this specification do not necessarily refer to a same embodiment, but mean "one or more but not all embodiments", unless otherwise specially emphasized in other ways. The terms "include", "comprise", "have" and their variations mean "including but not limited to", unless otherwise specially emphasized in other ways.

Before the method for displaying a lock screen image provided in the embodiments of this application is described in detail, custom words and terms involved in the embodiments of this application are first briefly described.

Lock screen: refers to a user interface presented first when a system is restarted or when the screen is reactivated following deactivation, provided that an electronic device is set with a lock screen password.

Lock screen image: is an image applied to a lock screen. A user may usually set a lock screen image in Themes, or may self-define a lock screen image in Gallery.

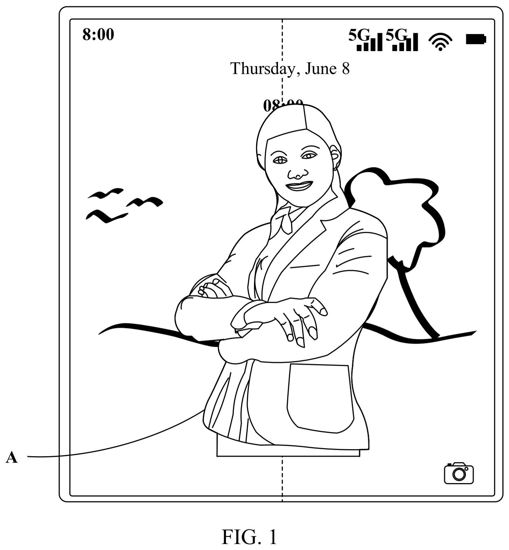

Depth-of-field lock screen image: refers to using an image with a depth-of-field capability (referred to as a depth-of-field image for short) as the lock screen image. The depth-of-field image includes a foreground image and a background image. When the depth-of-field image is displayed on a lock screen, the foreground image is displayed on an upper layer of a layer at which a system time indicator is located, and partially blocks the system time indicator. For example, refer to FIG. 1, FIG. 1 is a schematic diagram of a depth-of-field lock screen image according to an example embodiment. A part of time information is blocked by the foreground image (that is, a main image A).

Theme: refers to an interface style presented by an electronic device, and includes, but is not limited to: a desktop image and a lock screen image. A user may set a favored theme in the electronic device. When different themes are applied to the electronic device, interface styles presented by the electronic device are different. The lock screen image related to the theme usually includes a dynamic lock screen image, a depth-of-field lock screen image, and the like. The dynamic lock screen image is a lock screen image having dynamic effect. In an example, a depth-of-field lock screen image applied from the theme may be referred to as a theme depth-of-field lock screen image for short.

User-defined lock screen image: usually refers to using an image in Gallery application as a lock screen image. The user-defined lock screen image usually includes a user-defined common lock screen image and a user-defined depth-of-field lock screen image. The user-defined depth-of-field lock screen image refers to using an image that is selected by a user from Gallery application and that is with a depth-of-field capability as the lock screen image; and The user-defined common lock screen image usually refers to an image with no depth-of-field capability, that is, the user-defined common lock screen image refers to using a common image selected by a user from Gallery application as the lock screen image.

Magazine lock screen: refers to providing a plurality of different magazine lock screen images for the electronic device. In a case that a magazine lock screen function is enabled, when the electronic device is in a locked state and the screen is activated, one of the plurality of magazine lock screen images is displayed on the lock screen. In addition, when the user slides left or right on the lock screen, in response to a slide operation of the user, the electronic device may display a next or previous magazine lock screen image of the plurality of magazine lock screen images on the lock screen. These magazine lock screen images may be from one or more of a local preset resource, a cloud resource, or a resource manually added by a user.

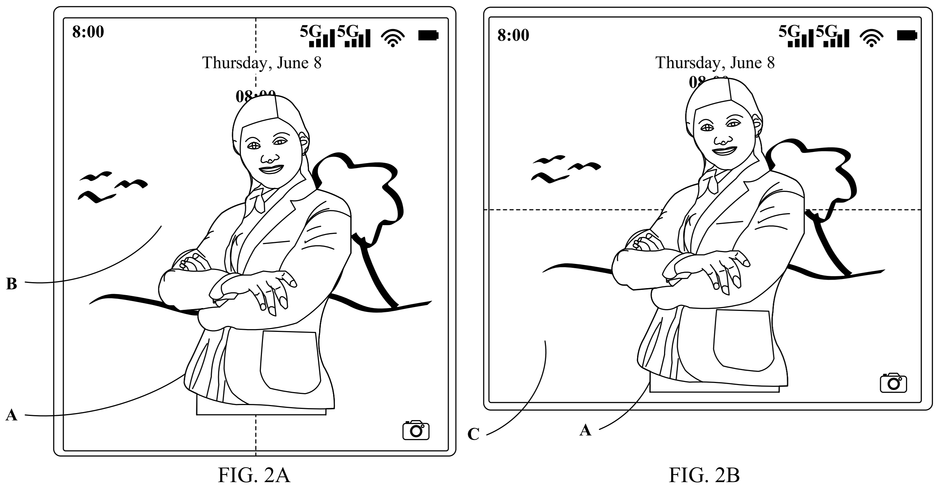

In an application scenario, in a process in which a user uses an electronic device, if the electronic device supports a landscape/portrait switching function, that is, a screen of the electronic device may be displayed in a portrait mode or a landscape mode, in this case, the user may activate the screen when the electronic device is in a portrait display state, or may activate the screen when the electronic device is in a landscape display state. If the lock screen image of the electronic device is a depth-of-field image, when landscape/portrait switching occurs on the electronic device, a relative position between a highest point position of a main image and a system time indicator in the depth-of-field image changes, causing poor display effect of the depth-of-field image, and affecting depth-of-field effect. For example, when the electronic device is in the portrait display state, a depth-of-field image corresponding to the portrait display state is image B, and display effect of image B on the lock screen is shown in FIG. 2A. A small part of main image A in image B covers on an upper layer of a system time indicator, and a highest point position of main image A is close to a middle position of the system time indicator in a vertical direction. When the electronic device sets a lock screen image, a size of an original image does not necessarily match a size of a display screen of the electronic device. Therefore, image B may be obtained after center cropping is performed on the original image. That is, the center of the original image is used as the center of image B, and the original image is cropped based on the size of the display screen, to obtain image B. A size of image B is the same as the size of the display screen. The original image is an image selected in a setting operation when the lock screen image is set. A length of the display screen of the electronic device in a horizontal direction is usually different from a width of the display screen of the electronic device in a vertical direction. Therefore, when the electronic device is in a screen-on state, after the user rotates the electronic device, to adapt to the size of the display screen, the electronic device needs to redirect centered view of image B to obtain image C. That is, image C is a lock screen image corresponding to the electronic device in the landscape display state. Display effect of image C on the lock screen is shown in FIG. 2B. Because image C is obtained after redirecting centered view of image B, most of main image A in image C covers on the upper layer of the system time indicator. Moreover, the highest point position of main image A exceeds a highest point position of the system time indicator in a vertical direction, that is, a relative position between the highest point position of main image A and the system time indicator changes, causing poor display effect of the depth-of-field image, and affecting depth-of-field effect.

To improve the display effect of the depth-of-field image, an embodiment of this application provides a method for displaying a lock screen image. In the method, a first image is displayed on a first lock screen in response to a screen-on operation, and after the electronic device is rotated, the electronic device displays a second image on a rotated second lock screen. Main images in the first image and the second image both block the system time indicator, and a position of the main image relative to the system time indicator in the second lock screen is the same as a position of the main image relative to the system time indicator in the first lock screen. Because the relative position between the main image and the system clock indicator does not change before and after the display screen of the electronic device is rotated, the display effect of the depth-of-field image is ensured, and display aesthetics of the depth-of-field image is improved.

For ease of understanding, next, application scenarios in the embodiments of this application are described by using an example in which the electronic device is a mobile phone having a foldable screen.

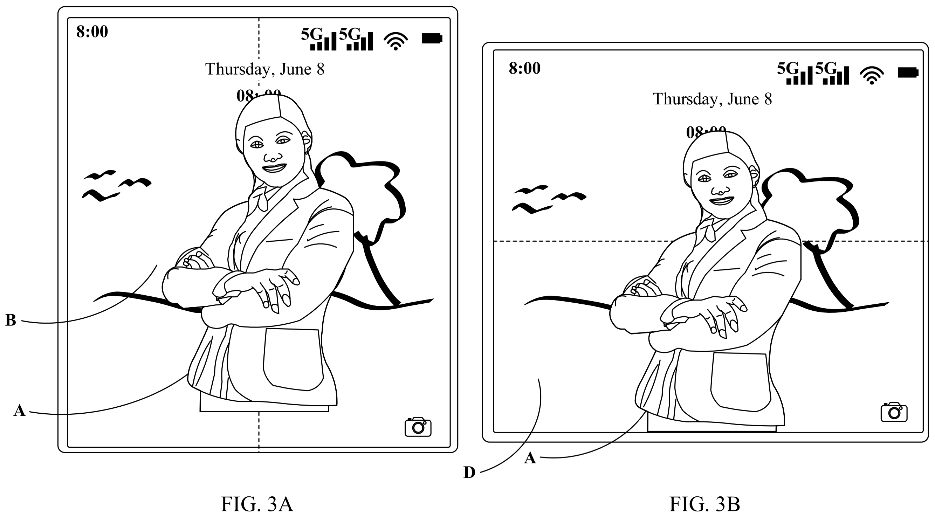

Refer to FIG. 3. FIG. 3A and FIG. 3B are a schematic diagram of an application scenario according to an example embodiment. In a possible scenario, when a user needs to use a mobile phone, if the user performs a screen-on operation on the mobile phone when the mobile phone is in a portrait display state, the mobile phone displays, in response to the screen-on operation, a lock screen shown in FIG. 3A. Depth-of-field image B is displayed on the lock screen, and depth-of-field image B includes a foreground image, that is, main image A. Main image A is located on an upper layer of a system time indicator and partially covers the system time indicator, a highest point of main image A is close to a middle position of the system time indicator in a vertical direction, and a length and a width of a display screen of the mobile phone are not the same. In this case, the user may rotate the mobile phone. In response to the operation of rotating the mobile phone, refer to FIG. 3B, the display screen is switched from the portrait display state to a landscape display state, and a lock screen image on the lock screen is updated from depth-of-field image B to depth-of-field image D. Depth-of-field image D includes main image A, and a size of depth-of-field image D is different from a size of depth-of-field image B. A highest point of main image A in the depth-of-field image is close to a middle position of the system time indicator in a vertical direction. That is, when the display state of the display screen is changed, the mobile phone may switch the lock screen image from depth-of-field image B to depth-of-field image C, and after image switching, relative positions between the highest point position of main image A and the system time indicator in the depth-of-field images are the same. This ensures display effect of the depth-of-field image, and improves display aesthetics of the depth-of-field image.

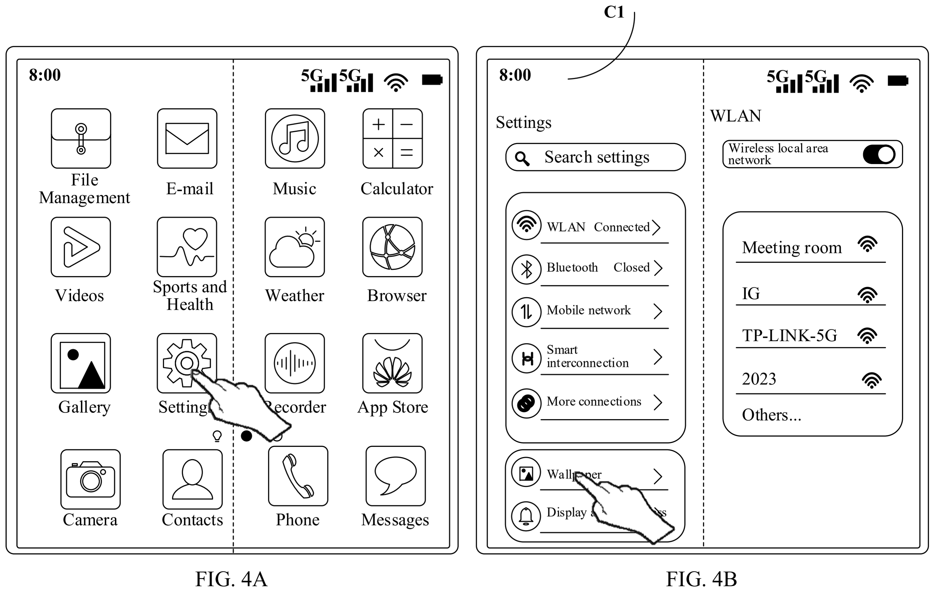

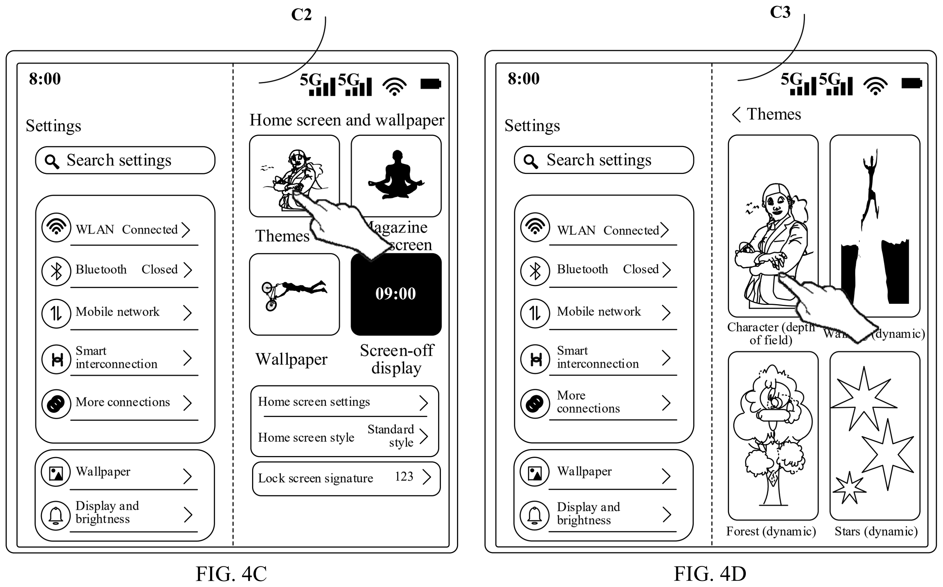

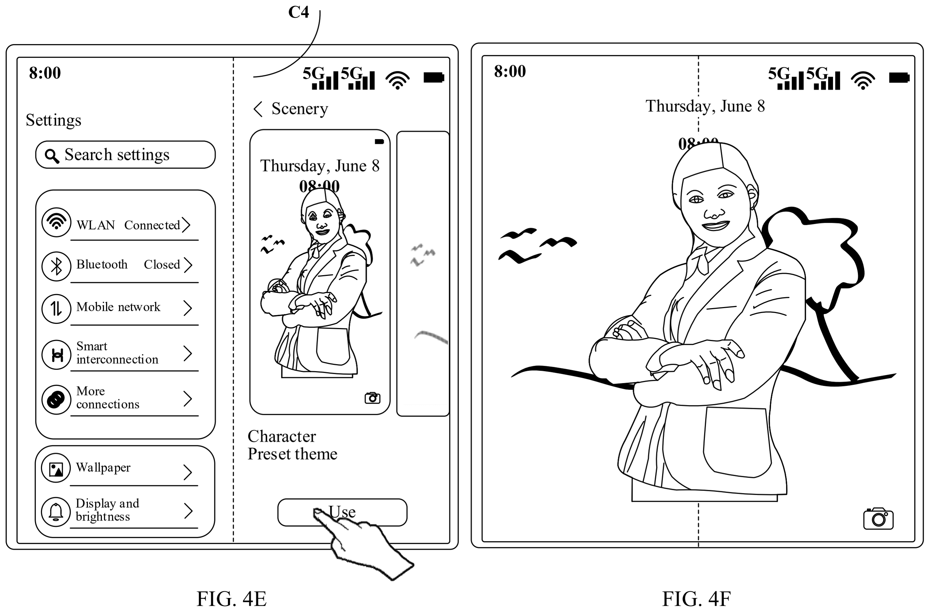

Next, a scenario of setting a depth-of-field image to a lock screen image is described. Refer to FIG. 4A, FIG. 4B, FIG. 4C, FIG. 4D, FIG. 4E, and FIG. 4F. FIG. 4A, FIG. 4B, FIG. 4C, FIG. 4D, FIG. 4E, and FIG. 4F are a schematic diagram of an application scenario according to an example embodiment. In another application scenario, if the user hopes that the lock screen image of the mobile phone can present depth-of-field effect, the user may set, by using Themes application, the depth-of-field image as the lock screen image. Refer to FIG. 4A. The user may tap an application identifier of Settings application. In response to the tap operation on the application identifier of Settings application, the mobile phone displays setting interface C1 shown in FIG. 4B. The user may tap a "Wallpaper" option in the setting interface. In response to the tap operation on the "Wallpaper" option, the mobile phone may display wallpaper setting interface C2 shown in FIG. 4C. A type option of the lock screen image is displayed in wallpaper setting interface C2, for example, a "Wallpaper" option (the option is usually an option of a static lock screen image), a "Themes" option, and a "Magazine Lock Screen" option are displayed, and the user may tap the "Themes" option. In response to the tap operation on the "Themes" option, the mobile phone displays theme selection interface C3 shown in FIG. 4D. Lock screen images corresponding to different themes are displayed on theme selection interface C3. For example, dynamic images having names of "Walking (dynamic)", "Forest (dynamic)", and "Stars (dynamic)" that correspond to a dynamic image theme, and a depth-of-field image having a name of "Character (depth of field)" that correspond to a depth-of-field image theme are displayed. The user may select the depth-of-field image having the name of "Character (depth of field)" as the lock screen image. In response to the selection operation on the depth-of-field image named "Character (depth of field)", the mobile phone displays preset theme interface C4 shown in FIG. 4E. If the user determines to use the depth-of-field image as the lock screen image, the user taps a "Use" option in the preset theme interface. In response to the tap operation on the "Use" option, the mobile phone may store the depth-of-field image as the lock screen image. Then, when the mobile phone displays a lock screen, the lock screen of the mobile phone may be shown as FIG. 4F. In FIG. 4F, a set theme depth-of-field lock screen image is displayed on the lock screen after the screen of the mobile phone is activated. The theme depth-of-field lock screen image includes a foreground image, that is, main image A, and main image A is located on an upper layer of a system time indicator and partially covers the system time indicator.

In another possible scenario, in response to the tap operation on the "Use" option, the mobile phone may display first prompt information, and the first prompt information is used for informing the user that the selected depth-of-field image has been set to the lock screen image.

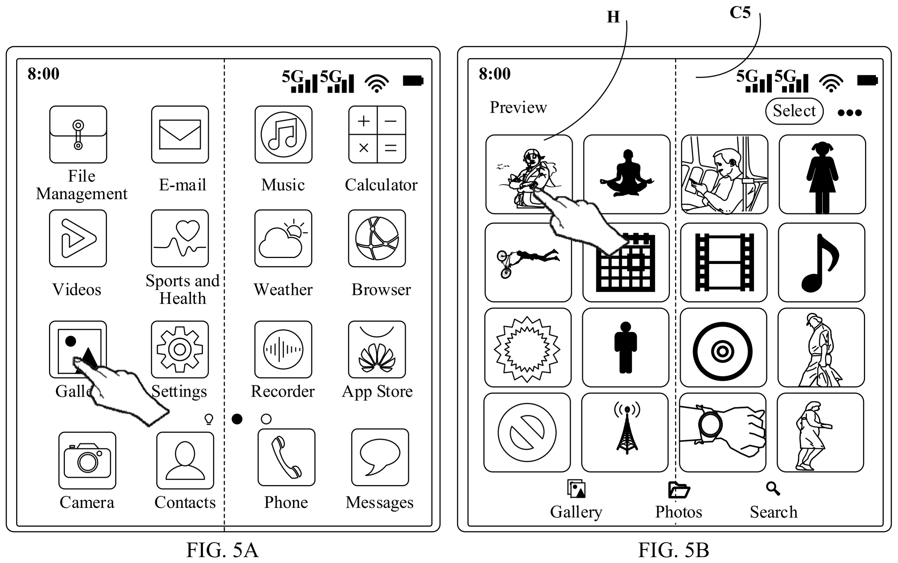

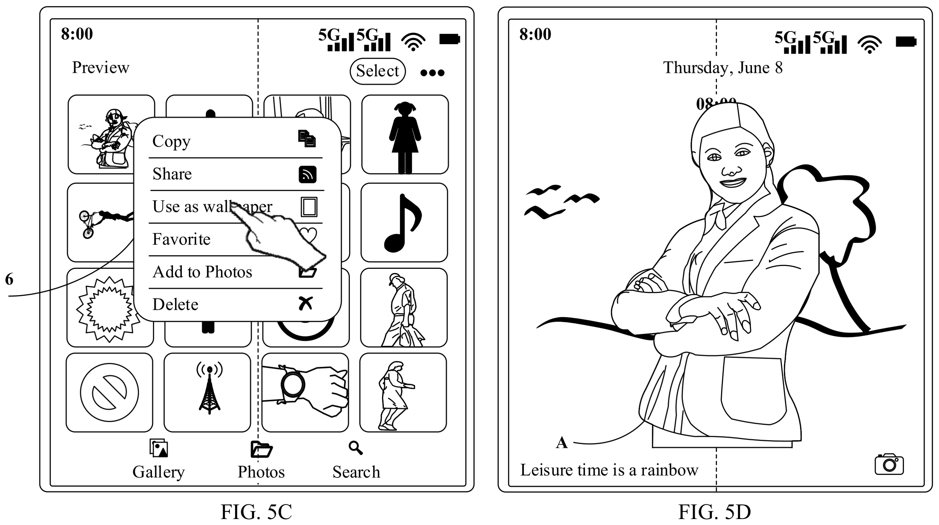

Refer to FIG. 5A, FIG. 5B, FIG. 5C, and FIG. 5D. FIG. 5A, FIG. 5B, FIG. 5C, and FIG. 5D are a schematic diagram of another application scenario according to an example embodiment. In another application scenario, the depth-of-field image in the lock screen image may alternatively be a user-defined image. Refer to FIG. 5A, the user may tap an application identifier of Gallery application. In response to the tap operation on the application identifier of Gallery application, the mobile phone displays gallery preview interface C5 shown in FIG. 5B. Gallery preview interface C5 may display thumbnails of a plurality of stored images. The user may select one of the thumbnails and set an image corresponding to the selected thumbnail as the lock screen image. For example, the user may perform a long press operation on a thumbnail of selected image H. In response to the long press operation on the thumbnail of image H, edit window C6 shown in FIG. 5C is displayed. A "Use as wallpaper" option is displayed in edit window C6; and the user may tap the "Use as wallpaper" option, and in response to the tap operation on the "Use as wallpaper" option, the mobile phone may store selected image H as the lock screen image. Then, when the mobile phone displays the lock screen, if image H is an image with a depth-of-field capability, the lock screen of the mobile phone may be shown as FIG. 5D. In FIG. 5D, a set user-defined depth-of-field lock screen image is displayed on the lock screen after the screen of the mobile phone is activated. The user-defined depth-of-field lock screen image includes a foreground image, that is, main image A, and main image A is located on an upper layer of a system time indicator and partially covers the system time indicator.

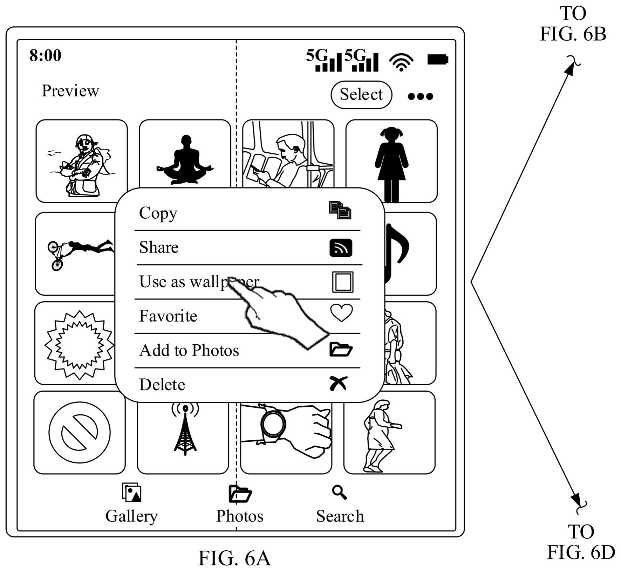

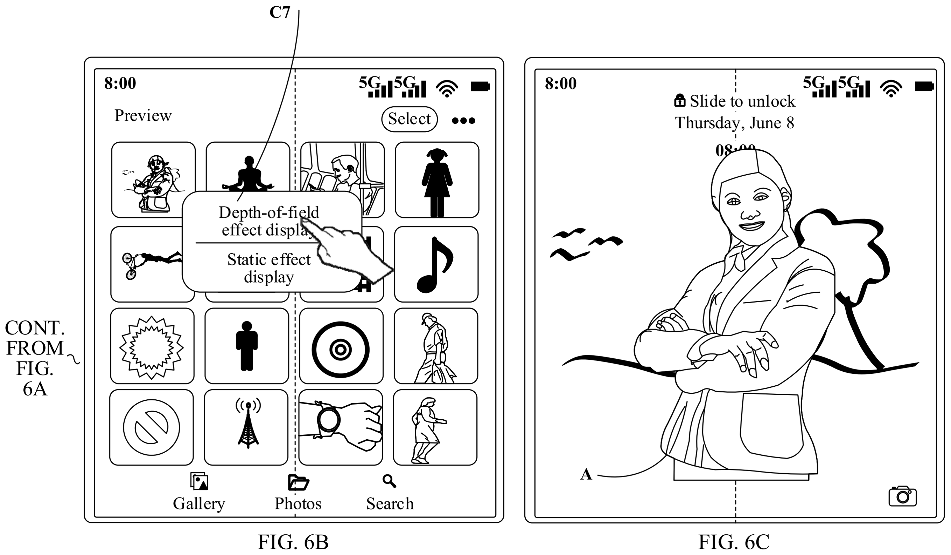

In another possible case, the mobile phone may automatically display, in the manner shown in FIG. 5A, FIG. 5B, FIG. 5C, and FIG. 5D, image H on the lock screen in a form of depth-of-field effect when image H is an image with a depth-of-field capability. Certainly, the user may alternatively select display effect of image H in a process of setting the lock screen image. For example, when the mobile phone displays edit window C6 shown in FIG. 6A, the user taps the "Use as wallpaper" option; and in response to the tap operation on the "Use as wallpaper" option, when image H is an image with a depth-of-field capability, the mobile phone displays display effect selection window C7 shown in FIG. 6B. The user may select, from display effect selection window C7, display effect of image H when used as the lock screen image. If the user taps a "Depth-of-field effect display" option, in response to the tap operation on the "Depth-of-field effect display" option, the mobile phone may store selected image H as the lock screen image. Then, when the mobile phone displays a lock screen, the lock screen of the mobile phone may be shown as FIG. 6C.

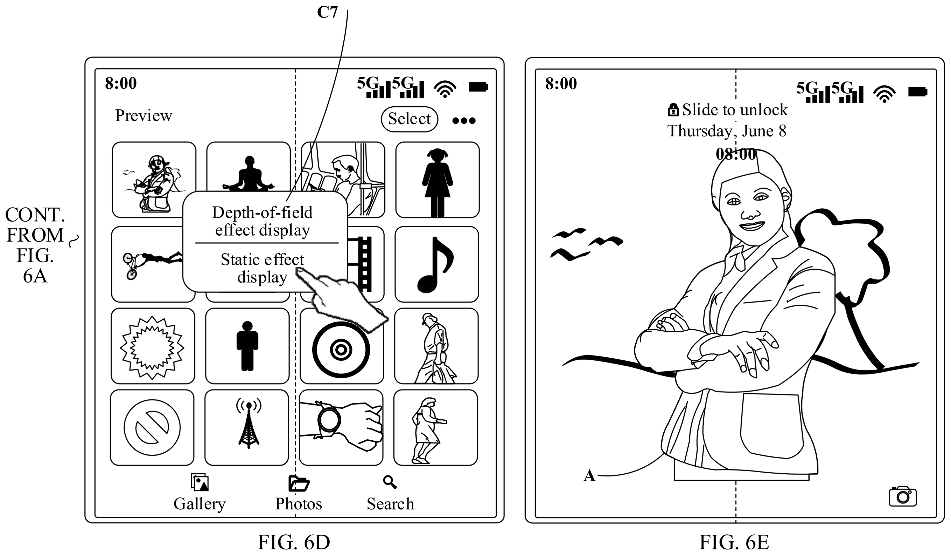

In another possible scenario, refer to FIG. 6D, if the user taps a "Static effect display" option, in response to the tap operation on the "Depth-of-field effect display" option, the mobile phone may store selected image H as the lock screen image. Then, when the mobile phone displays a lock screen, the lock screen of the mobile phone may be shown as FIG. 6E. In the lock screen, image H is displayed on a lower layer of the system time indicator, that is, image H does not block the system time indicator.

In another possible scenario, in a process in which the mobile phone stores image H as the lock screen image, second prompt information may be displayed. The second prompt information is used for informing the user that the selected image has been set as the lock screen image.

It should be noted that, the foregoing application scenarios shown in FIG. 3A and FIG. 3B to FIG. 6A, FIG. 6B, FIG. 6C, FIG. 6D, and FIG. 6E are merely used as examples for description in the embodiments of this application, and do not constitute a limitation on this application.

A software system architecture of the electronic device is described below.

A software system of the electronic device may use a layered architecture, an event-driven architecture, a microkernel architecture, a microservice architecture, or a cloud architecture. In this embodiment of this application, the software system of the electronic device is described by using an Android (Android) system with the layered architecture as an example.

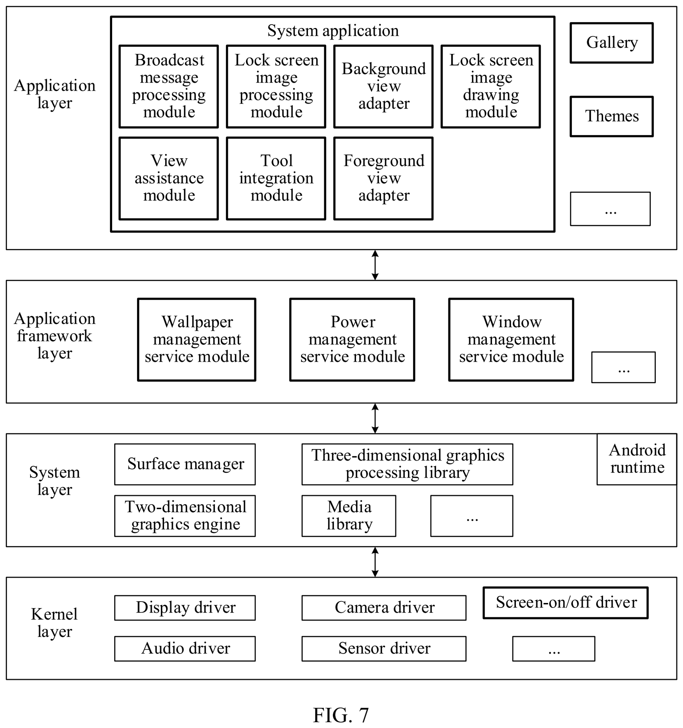

FIG. 7 is a block diagram of a software system of an electronic device according to an embodiment of this application. Refer to FIG. 7, in a layered architecture, software is divided into several layers, and each layer has a clear role and task. The layers communicate with each other by using a software interface. In some embodiments, the Android system is divided into four layers, which are an application layer, an application framework layer, an Android runtime (Android runtime) and system library, and a core layer from top to bottom respectively.

The application layer may include a series of application packages. As shown in FIG. 7, the application layer may include applications such as a system application (System UI), Themes application, Gallery application, and the like.

System UI is a first user-visible application in a system startup process of the electronic device, for example, a lock screen displayed after the electronic device is powered on, or a home screen or a status bar displayed after the electronic device is unlocked. System UI is a set of UI components that provide system-level information display and interaction for the user, and may be configured to control display of a lock screen image and a home screen image. In the embodiments of this application, System UI may be configured to interact with Themes application or Gallery application, to display, when the depth-of-field lock screen image is applied to the electronic device, the set depth-of-field lock screen image on a lock screen when the screen is activated. In an example, refer to FIG. 7, System UI includes a plurality of functional modules. The plurality of functional modules include, but are not limited to, a broadcast message processing module (Statusbar), a lock screen image processing module (KeyguardWallpaper), a lock screen image drawing module (KeyguardWallpaperMediator), a view assistance module (ViewRoottimpl), a background view adapter (WallpaperPagerAdapterNoAnimation), a foreground view adapter (WallpaperPagerAdapterForeground), a foreground view page component, a background view page component, and a tool integration module (WallpaperUtils).

The broadcast message processing module is configured to listen to a wallpaper change broadcast message, and mark a type of a currently set lock screen image; the lock screen image processing module is configured to control displaying of a lock screen image; the view assistance module is configured to monitor a display state of a display screen; the lock screen image drawing module is configured to notify a view (view) of performing view rendering; the foreground view page component includes a plurality of views, each view may be used for rendering a foreground image of a depth-of-field image, and the foreground view adapter is configured to populate the view in the foreground view page component; and the background view page component includes a plurality of views, each view may be used for rendering a background image of a depth-of-field image, and the background view adapter is configured to populate the view in the background view page component. In an example, the foreground view adapter is coupled to the foreground view page component, and the background view adapter is coupled to the background view page component. In another example, the foreground view adapter is decoupled from the foreground view page component, and the background view adapter is decoupled from the background view page component. The tool integration module is configured to crop a set lock screen image.

A plurality of theme images are provided in Themes application, for the user to set a theme image as a home screen image or a lock screen image of the electronic device. Themes application may be Settings application built in the system, or may be an installed third-party application.

Gallery application is configured to store an image. For example, an image may be photographed or may be from the cloud. In an example of this application, Gallery application includes a common image and an image with a depth-of-field capability. The common image is with no depth-of-field effect when applied to the lock screen, and the image with a depth-of-field capability is with depth-of-field effect when applied to the lock screen. The user may select any image from Gallery application, and set the image as the lock screen image of the electronic device.

The application framework layer provides an application programming interface (application programming interface, API) and a programming framework for applications at the application layer. The application framework layer includes some predefined functions.

As an example of this application, the application framework layer includes a wallpaper management service module. The wallpaper management service module is configured to deliver a wallpaper change broadcast message to System UI when a notification of a wallpaper change event of Themes application or Gallery application is detected through listening, so that System UI performs wallpaper change processing. In an example, the wallpaper management service module is named as WallpaperManagerService.

Refer to FIG. 7, the application framework layer further includes a power management service module and a window management service module. The power management service module is configured to: when a screen-off event or a screen-on event exists in the electronic device, control the screen to be deactivated or activated, and deliver a screen-off notification or a screen-on notification to related modules. The window management service module is configured to be responsible for managing a lock screen, for example, display a lock screen image on the lock screen. In an example, the power management service module is named as PowerManagerService, and the window management service module is named as WindowManagerService.

Android Runtime includes a kernel library and a virtual machine. Android runtime is responsible for scheduling and managing the Android system. The kernel library includes two parts: one part is a performance function which the java language needs to call, and the other part is a kernel library of Android. The application layer and the application framework layer are run in the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Libraries), a three-dimensional graphics processing library (for example, OpenGL ES), a 2D graphics engine (for example, SGL). The surface manager is configured to manage a display subsystem, and provide 2D and 3D layer fusion for a plurality of applications. The media library supports playback and recording in a plurality of commonly used audio and video formats, a still image file, and the like. The media library may support a plurality of audio and video encoding formats, for example, MPEG4, H.264, MP3, AAC, AMR, JPG, PNG, and the like. The three-dimensional graphics processing library is configured to implement three-dimensional graphics drawing, image rendering, synthesis, layer processing, and the like. The 2D graphics engine is a drawing engine for 2D drawing.

The kernel layer is a layer between hardware and software. The kernel layer includes at least a display driver, a camera driver, an audio driver, and a sensor driver.

The method for displaying a lock screen image provided in the embodiments of this application is described below.

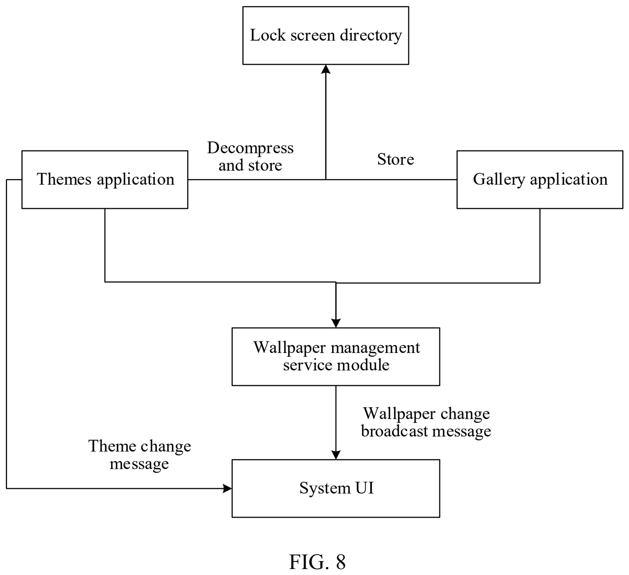

Refer to FIG. 8. FIG. 8 is a schematic diagram of a framework of displaying a lock screen image according to an example embodiment. During implementation, as shown in FIG. 4A, FIG. 4B, FIG. 4C, FIG. 4D, FIG. 4E, and FIG. 4F, a user may set a lock screen image in Themes application, or as shown in FIG. 5A, FIG. 5B, FIG. 5C, and FIG. 5D, the user may set a lock screen image in Gallery application. In an example of this application, no matter which way the user sets the lock screen image, when the lock screen image set by the user is a depth-of-field lock screen image, both a foreground image (that is, a main image) and a background image of the set depth-of-field lock screen image are stored in a lock screen directory, and renamed separately. At most one background image and one foreground image are stored in the lock screen directory. That is, in a process of updating the background image and the foreground image in the lock screen directory, both a name of the updated foreground image and a name of the updated background image remain unchanged in the lock screen directory. For example, the lock screen directory is data/themes/0/wallpaper, the name of the foreground image in the lock screen directory is unlock_depth_effect_wallpaper_0.jpg, and the name of the background image in the lock screen directory is unlock_wallpaper_0.jpg.

In an example, when the user sets a lock screen image in Themes application, after the user selects theme depth-of-field lock screen image E and applies it, that is, triggers a lock screen wallpaper setting operation, Themes application obtains a compressed package of theme depth-of-field lock screen image E. The compressed package includes a foreground image and a background image of theme depth-of-field lock screen image E, and the compressed package may be preset locally in the electronic device or preset at a cloud and obtained by the electronic device. Then, Themes application decompresses the compressed package and stores the decompressed foreground image and background image in the lock screen directory. In addition, Themes application may send a theme change message to System UI, so that System UI changes a layout of the lock screen.

In another example, when the user sets a lock screen image in Gallery application, after the user selects user-defined depth-of-field lock screen image F in Gallery application and applies it, that is, triggers a lock screen wallpaper setting operation, Gallery application obtains a foreground image and a background image that are of user-defined depth-of-field lock screen image F and that are pre-stored, and then, stores the foreground image and the background image of user-defined depth-of-field lock screen image F in the lock screen directory.

It should be noted that, the foreground image and the background image that are of user-defined depth-of-field lock screen image F and that are pre-stored in Gallery application may be generated when the electronic device is idle, or may be generated when the electronic device is charged. For example, in a charged state, the electronic device may traverse depth-of- field images in Gallery application, when a depth-of-field image is traversed, if the depth-of-field image is not traversed before, the electronic device may separate, by using an artificial intelligence (Artificial Intelligence, AI) main body identification method, a background image and a foreground image of the currently traversed depth-of-field image, and then correspondingly store the separated foreground image and background image and the currently traversed depth-of-field image. In this way, when the user sets any depth-of-field image in Gallery application as the lock screen image, Gallery application may directly store a foreground image and a background image that are of the depth-of-field image and that are pre-stored in the lock screen directory.

It should be additionally noted that, an example in which the lock screen image that is set by the user is a depth-of-field image is used for description above. In another example, if the lock screen image set by the user is not a depth-of-field image, an image stored in the lock screen directory includes only one background image, and the background image is the set lock screen image. That is, in this case, there is no foreground image in the lock screen directory.

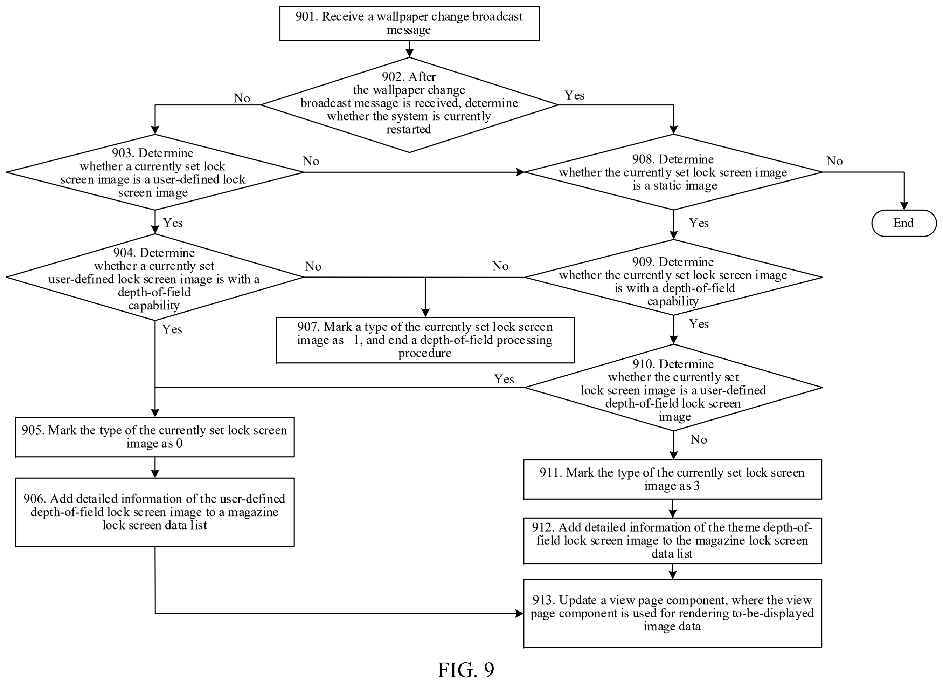

Still refer to FIG. 8, after receiving the lock screen wallpaper setting operation of the user, Themes application or Gallery application notifies the wallpaper management service module that a wallpaper change event occurs. After detecting, through listening, the notification, the wallpaper management service module delivers a wallpaper change broadcast message to System UI, so that System UI performs some initialization processing on display of the lock screen image. Specifically, refer to FIG. 9, the initialization processing operation of System UI may include the following content.

Step 901: Receive a wallpaper change broadcast message.

In a possible case, the wallpaper change broadcast message is delivered to System UI after the wallpaper management service module detects, through listening, a notification of a wallpaper change event delivered by Themes application. For example, refer to FIG. 4A, FIG. 4B, FIG. 4C, FIG. 4D, FIG. 4E, and FIG. 4F, after the user sets a theme depth-of-field lock screen image in Themes application, Themes application notifies the wallpaper management service module that a wallpaper change event occurs, and then the wallpaper management service module sends a wallpaper change broadcast message to System UI.

In another possible case, the wallpaper change broadcast message is delivered to System UI after the wallpaper management service module detects, through listening, a notification of a wallpaper change event delivered by Gallery application. For example, refer to FIG. 5A, FIG. 5B, FIG. 5C, and FIG. 5D, after the user sets a user-defined depth-of-field lock screen image in Gallery application, Gallery application notifies the wallpaper management service module that a wallpaper change event occurs, and then the wallpaper management service module sends a wallpaper change broadcast message to System UI.

In an example, the wallpaper change broadcast message may carry first indication information, and the first indication information indicates that the currently set lock screen image is a theme lock screen image or a user-defined lock screen image. Specifically, because the wallpaper management service module can learn whether it is Themes application or Gallery application that notifies the wallpaper change event, the wallpaper management service module may determine whether the currently set lock screen image is from Themes application or Gallery application. Based on this, when the wallpaper change broadcast message is sent to System UI, the first indication information may be carried in the wallpaper change broadcast message, so that System UI may determine, based on the wallpaper change broadcast message, whether the currently set lock screen image is the theme lock screen image or the user-defined lock screen image. For example, when the first indication information is a preset identifier, the first indication information indicates that the currently set lock screen image is a user-defined lock screen image; otherwise, when the first indication information is not a preset identifier, the first indication information indicates that the currently set lock screen image is a theme lock screen image.

Optionally, the wallpaper change broadcast message may further carry event description information. The event description information indicates an application object of wallpaper change. The application object includes a user interface or a lock screen. That is, the event description information indicates whether a home screen image is changed or a lock screen image is changed. In this embodiment of this application, an example in which the event description information indicates that the application object of wallpaper change is the lock screen is used for description.

Step 902: After the wallpaper change broadcast message is received, determine whether the system is currently restarted.

It can be learned from FIG. 8 and the foregoing description that, after the user sets the lock screen image, System UI may receive the wallpaper change broadcast message. In another possible case, after the electronic device is powered on and restarted, System UI may also receive the wallpaper change broadcast message. For example, the wallpaper management service module may deliver the wallpaper change broadcast message to System UI when the electronic device is powered on and restarted. For the foregoing two cases, processing manners of System UI are different. Therefore, after the wallpaper change message is received, System UI may first determine whether the system is currently restarted.

In an example, System UI may query whether the electronic device currently displays a home screen. If the electronic device currently displays the home screen, it is determined that the system is not restarted. Otherwise, if the electronic device currently does not display the home screen, it is determined that the system is restarted. Further, System UI may determine, by querying a restart identifier, whether the electronic device currently displays the home screen. For example, when the restart identifier is true, it is determined that the electronic device currently displays the home screen, and therefore, it may be determined that the system is not restarted; and when the restart identifier is false, it is determined that the electronic device currently does not display the home screen, and therefore, it may be determined that the system is restarted.

When it is determined that the system is not currently restarted, an operation in the following step 903 is performed. Otherwise, when it is determined that the system is currently restarted, an operation in the following step 908 is performed.

Step 903: Determine whether the currently set lock screen image is the user-defined lock screen image.

In an example of this application, System UI may determine, based on the first indication information carried in the wallpaper change broadcast message, whether the currently set lock screen image is the user-defined lock screen image. For example, when the first indication information is the preset identifier, it is determined that the currently set lock screen image is the user-defined lock screen image; otherwise, when the first indication information is not the preset identifier, it is determined that the currently set lock screen image is not the user-defined lock screen image.

When the currently set lock screen image is the user-defined lock screen image, an operation in the following step 904 is performed. Otherwise, when the currently set lock screen image is not the user-defined lock screen image, it indicates that the currently set lock screen image is the theme lock screen image. In this case, an operation in the following step 908 is performed.

Step 904: Determine whether the currently set user-defined lock screen image is with a depth-of-field capability.

In an example of this application, the lock screen directory is used only for storing lock screen images, when the set lock screen image is a depth-of-field image, the lock screen directory includes two images: unlock_depth_effect_wallpaper_0.jpg (a foreground image) and unlock_wallpaper_0.jpg (a background image), and when the set lock screen image is not a depth-of-field image, the lock screen directory includes only one image: unlock_wallpaper_0.jpg (a background image). Therefore, System UI may query, in the lock screen directory, whether both the foreground image and the background image exist, to determine whether the currently set self-defined lock screen image is with the depth-of-field capability. Specifically, when both a foreground image and a background image exist in the lock screen directory, it may be determined that the user-defined lock screen image currently set by the user is with the depth-of-field capability; otherwise, when only the background image exists in the lock screen directory, it is determined that the user-defined lock screen image currently set by the user is with no depth-of-field capability.

When the currently set user-defined lock screen image is with the depth-of-field capability (referred to as a user-defined depth-of-field lock screen image below), operations in the following step 905 to step 906 are performed. Otherwise, when the currently set user-defined lock screen image is with no depth-of-field capability, an operation in the following step 907 is performed.

Step 905: Mark a type of the lock screen image as 0.

In an example, System UI may mark a type of the currently set lock screen image in a lightweight database. That is, when the currently set lock screen image is a user-defined depth-of-field lock screen image, System UI writes the type of the currently set lock screen image of 0 into the lightweight database. For example, System UI may indicate a type of the currently set lock screen image by using first indication information.

It should be noted that, the type of the currently set lock screen image recorded in the lightweight database is unique. The lightweight database may be SharedPreferences.

Step 906: Add detailed information of the user-defined depth-of-field lock screen image to a magazine lock screen data list.

In an example of this application, the detailed information of the user-defined depth-of-field lock screen image includes a background thumbnail, index information, image description information, and the like of the user-defined depth-of-field lock screen image. The background thumbnail is an image obtained after compressing a background image of the user-defined depth-of-field lock screen image according to a proportion. The background image may be obtained from the lock screen directory. The index information is used for querying the magazine lock screen data list for the detailed information of the user-defined depth-of-field lock screen image. The image description information includes an application gadget, text information, and the like. The text information may be used for describing what the user-defined depth-of-field lock screen image represents. For example, as shown in FIG. 5D, the text information is "Leisure time is a rainbow".

The magazine lock screen data list includes detailed information of each of a plurality of magazine lock screen images. In an example of this application, regardless of whether the magazine lock screen function is in an enabled state, detailed information of the user-defined lock screen image may be added to the magazine lock screen data list. When the magazine lock screen function is in a disabled state, the currently set lock screen image may be displayed when the lock screen is displayed subsequently, and a magazine lock screen image in a magazine lock screen resource is not displayed when a slide operation is performed on the lock screen.

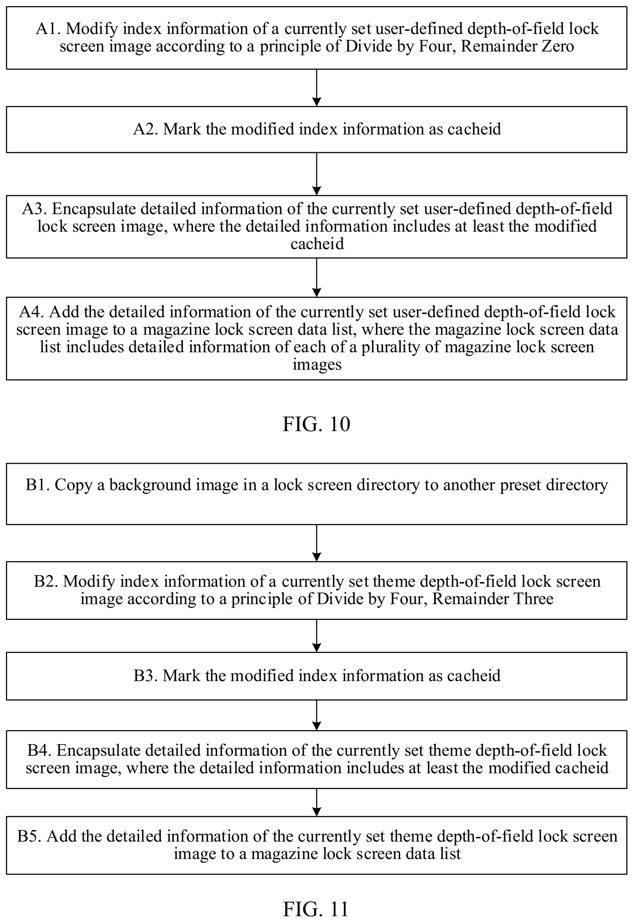

In an example of this application, refer to FIG. 10, specific implementation of step 906, that is, specific implementation of adding the detailed information of the user-defined depth-of-field lock screen image to the magazine lock screen data list may include the following several steps.

A1: Modify the index information of the currently set user-defined depth-of-field lock screen image according to a principle of Divide by Four, Remainder Zero.

Generally, original index information of each lock screen image is a value. When the type of the lock screen image is 0, it indicates that the lock screen image is a user-defined depth-of-field lock screen image. Therefore, to subsequently recognize that the currently set lock screen image is the user-defined depth-of-field lock screen image, the index information may be modified based on the original index information according to the principle of Divide by Four, Remainder Zero.

In an example, a corresponding value of Divide by Four, Remainder Zero may be determined based on the original index information of the user-defined depth-of-field lock screen image by using the following first formula (1), and the index information of the currently set user-defined depth-of-field lock screen image is modified to the determined value of Divide by Four, Remainder Zero.

$$(4 - X_1 \% 4) + X_1 = Y_1 \qquad (1)$$

It should be noted that, in the foregoing first formula (1): $X_1$ is the original index information of the user-defined depth-of-field lock screen image, $Y_1$ is the modified value of Divide by Four, Remainder Zero, and % is a modulo operator. For example, it is assumed that the original index information of the currently set user-defined depth-of-field lock screen image is 7, the corresponding value of Divide by Four, Remainder Zero, such as 8, may be determined by using the foregoing first formula (1), and then the index information of the currently set user-defined depth-of-field lock screen image is modified from 7 to 8.

A2: Mark the modified index information as cacheid, and write the modified index information into the lightweight database.

A3: Encapsulate the detailed information of the currently set user-defined depth-of-field lock screen image, where the detailed information includes at least the modified cacheid.

In an example of this application, System UI may encapsulate the detailed information into a data structure. For example, the data structure is BigPictureInfo. As an example rather than a limitation, System UI may further set some restriction conditions in BigPictureInfo. For example, the restriction conditions may include: the user-defined depth-of-field lock screen image cannot be deleted, an automatic switching function of the lock screen is disabled, and the like.

A4: Add the detailed information of the currently set user-defined depth-of-field lock screen image to the magazine lock screen data list, where the magazine lock screen data list includes detailed information of each of the plurality of magazine lock screen images.

The detailed information of the magazine lock screen image may include index information, a background thumbnail, image description information, and the like of the magazine lock screen image. The background thumbnail of the magazine lock screen image is obtained after compressing the magazine lock screen image according to a proportion. In an example of this application, detailed information of each magazine lock screen image corresponds to BigPictureInfo.

In an example of this application, the detailed information of the currently set user-defined depth-of-field lock screen image may be randomly inserted into any position in the magazine lock screen data list.

In an example, System UI may further prepare a background blur image of the currently set depth-of-field image. The background blur image may be displayed when the user slides up the lock screen, that is, blur effect occurs on the electronic device when the user slides up the lock screen. The background blur image may be generated based on the background image. For example, when a currently set lock screen image is a depth-of-field image, the background image may be obtained from the lock screen directory, Gaussian blur processing is performed on the background image to obtain the background blur image, and then the background blur image may be stored.

As an example rather than a limitation, System UI adds, by using a lock screen image processing module, the detailed information of the user-defined depth-of-field lock screen image to the magazine lock screen data list.

It should be noted that, in this embodiment of this application, an example in which when the currently set lock screen image is the depth-of-field lock screen image (including the user-defined depth-of-field lock screen image or the theme depth-of-field lock screen image), the detailed information added to the magazine lock screen data list includes the background image of the depth-of-field lock screen image is used for description. In another example, when the set lock screen image is the depth-of-field lock screen image, the detailed information of the depth-of-field lock screen image added to the magazine lock screen data list includes a background thumbnail but does not include a background image. That is, instead of encapsulating the background image into the detailed information, the background thumbnail of the depth-of-field lock screen image may be encapsulated into the detailed information. In this way, a storage space of the magazine lock screen data list may be saved.

After the detailed information of the user-defined depth-of-field lock screen image is added to the magazine lock screen data list, System UI performs an operation in the following step 913.

Step 907: Mark the type of the lock screen image as -1, and end a depth-of-field processing procedure.

To be specific, when the currently set lock screen image is a user-defined common lock screen image, System UI writes the type of the currently set lock screen image of -1 into the lightweight database, indicating that the currently set lock screen image is a user-defined lock screen image but is not a depth-of-field image. Then, System UI ends the depth-of-field processing procedure.

Step 908: Determine whether the currently set lock screen image is a static image.

As an example rather than a limitation, System UI may determine, based on the wallpaper change broadcast message, whether the currently set lock screen image is a static image. For example, when notifying the wallpaper management service module that a wallpaper change event occurs, Themes application may indicate, to the wallpaper management service module, whether the lock screen image set by the user is a static image. Correspondingly, when sending the wallpaper change broadcast message to System UI, the wallpaper management service module may indicate in the wallpaper change broadcast message, so that System UI determines whether the currently set lock screen image is a static image.

When the currently set lock screen image is a static image, an operation in the following step 909 is performed. Otherwise, when the currently set lock screen image is not a static image, for example, the set lock screen image is a dynamic image, System UI ends the depth-of-field processing procedure. As an example rather than a limitation, System UI may enter a dynamic image processing procedure later. This is not limited in this embodiment of this application.

Step 909: Determine whether the currently set lock screen image is with a depth-of-field capability.

To be specific, it is determined whether the currently set lock screen image is a depth-of-field image. During implementation, System UI may query, in the lock screen directory, whether both a foreground image and a background image exist, to determine whether the currently set lock screen image is with a depth-of-field capability. Specifically, when both a foreground image and a background image exist in the lock screen directory, it may be determined that the lock screen image currently set by the user is with the depth-of-field capability; otherwise, when only the background image exists in the lock screen directory, it is determined that the lock screen image currently set by the user is with no depth-of-field capability.

When the currently set lock screen image is with no depth-of-field capability, System UI performs an operation in the following step 907. Otherwise, when the currently set lock screen image is with the depth-of-field capability, System UI performs an operation in the following step 910.

Step 910: Determine whether the currently set lock screen image is a user-defined depth-of-field lock screen image.

It can be learned based on the foregoing descriptions and with reference to FIG. 8 that, in a possible case, after the system is restarted, execution proceeds to step 910. In another possible case, execution also proceeds to step 910 after the user sets the lock screen image. In a first possible case, before the system of the electronic device is restarted, the user may have set the user-defined depth-of-field lock screen image as the lock screen image. Therefore, in this case, operations such as subsequent initialization on the theme depth-of-field image do not need to be performed. Therefore, it needs to be determined herein whether the currently set lock screen image is the user-defined depth-of-field lock screen image.

If the currently set lock screen image is the user-defined depth-of-field lock screen image, operations in step 905 to step 906 are performed. If the user-defined depth-of-field lock screen image is not currently applied to the electronic device, it may be determined that the currently set lock screen image is the theme depth-of-field lock screen image. In this case, an operation in the following step 911 is performed.

Step 911: Mark a type of the currently set lock screen image as 3.

To be specific, when the currently set lock screen image is a theme depth-of-field lock screen image, System UI writes the type of the currently set lock screen image of 3 into the lightweight database, indicating that the currently set lock screen image is a theme lock screen image and is with a depth-of-field capability.

Certainly, it should be noted that, the foregoing implementation step of marking the type of the currently set lock screen image after the wallpaper change broadcast message is received is optional. In another example, to satisfy exception handling, other steps may be included, or other manners may be used for marking. Main marking principles thereof are as follows: When the system is not restarted, if the currently set lock screen image is a user-defined depth-of-field lock screen image, record the type of the currently set lock screen image as 0 in the lightweight database; if the currently set lock screen image is a user-defined common lock screen image, record the type of the currently set lock screen image as -1 in the lightweight database; and if the currently set lock screen image is the theme depth-of-field lock screen image, record the type of the currently set lock screen image as 3 in the lightweight database. When the system is restarted, if the lock screen image set before power-on is a static image and with no depth-of-field capability, record the type of the currently set lock screen image as -1 in the lightweight database; if the lock screen image set before power-on is a theme depth-of-field lock screen image, record the type of the currently set lock screen image as 3 in the lightweight database; and if the lock screen image set before power-on is a user-defined depth-of-field lock screen image, record the type of the currently set lock screen image as 0 in the lightweight database.

Step 912: Add detailed information of the theme depth-of-field lock screen image to the magazine lock screen data list.

When it is determined that the currently set lock screen image is the theme depth-of-field lock screen image, System UI performs depth-of-field initialization based on the theme depth-of-field lock screen image, and a main objective is to add the detailed information of the currently set theme depth-of-field lock screen image to the magazine lock screen data list.

In an example of this application, refer to FIG. 11, specific implementation of step 912, that is, specific implementation of adding the detailed information of the theme depth-of-field lock screen image to the magazine lock screen data list may include the following several steps.

B1: Copy the background image in the lock screen directory to another preset directory.

To prevent the background image of the theme depth-of-field lock screen image from being subsequently replaced with a user-defined lock screen image, System UI may copy a background image of the currently set theme depth-of-field lock screen image from the lock screen directory to a preset directory. For example, the preset directory may be data/user_de/0/com.android.systemui/files.

In a possible implementation, a replaced scenario refers to: it is assumed that the user currently sets theme depth-of-field lock screen image P1, and in this case, a background image stored in the lock screen directory is a background image of the set theme depth-of-field lock screen image P1, and System UI adds detailed information of theme depth-of-field lock screen image P1 to the magazine lock screen data list. Then, if the user newly sets user-defined depth-of-field lock screen image P2, in this case, the background image stored in the lock screen directory is replaced with a background image of user-defined depth-of-field lock screen image P2, and System UI adds detailed information of the user-defined depth-of-field lock screen image P2 to the magazine lock screen data list. Consequently, the magazine lock screen data list no longer includes the detailed information of theme depth-of-field lock screen image P1. However, during implementation, when user-defined depth-of-field lock screen image P2 is set after theme depth-of-field lock screen image P1 is set, the previously set theme depth-of-field lock screen image P1 may be reserved in the magazine lock screen resource as a common lock screen image. In this way, when the lock screen of the electronic device flips pages to theme depth-of-field lock screen image P1 in response to an operation of the user sliding left or right on the lock screen, theme depth-of-field lock screen image P1 is with no depth-of-field effect, and when pages are flipped to user-defined depth-of-field lock screen image P2, user-defined depth-of-field lock screen image P2 is with the depth-of-field effect. Therefore, to achieve the effect, the background image of theme depth-of-field lock screen image P1 needs to be reserved. To prevent the background image of theme depth-of-field lock screen image P1 from being replaced with the background image of user-defined depth-of-field lock screen image P2, in a process of performing depth-of-field initialization based on theme depth-of-field lock screen image P1, the background image of theme depth-of-field lock screen image P1 may be copied from the lock screen directory to another preset directory for saving.

It should be noted that, in an example of this application, in the process of setting the depth-of-field image as the lock screen image, the foreground image in the lock screen directory is unique, that is, in this embodiment of this application, setting only one depth-of-field image (the user-defined depth-of-field lock screen image or the theme depth-of-field lock screen image) as the lock screen image may be supported.

B2: Modify the index information of the currently set theme depth-of-field lock screen image according to a principle of Divide by Four, Remainder Three.

When the type of the lock screen image is 3, it indicates that the lock screen image is a theme depth-of-field lock screen image. Therefore, to subsequently recognize that the currently set lock screen image is the theme depth-of-field lock screen image, the index information may be modified based on the original index information of the theme depth-of-field lock screen image according to the principle of Divide by Four, Remainder Three.

In an example, a corresponding value of Divide by Four, Remainder Three may be determined based on the original index information of the theme depth-of-field lock screen image by using the following second formula (2), and the index information of the currently set theme depth-of-field lock screen image is modified to the determined value of Divide by Four, Remainder Three.

$$(3 - X_2 \% 4) + X_2 = Y_2 \qquad (2)$$

It should be noted that, in the foregoing second formula (2): $X_2$ is the original index information of the theme depth-of-field lock screen image, $Y_2$ is the modified value of Divide by Four, Remainder Three, and % is a modulo operator. For example, it is assumed that the original index information of the currently set theme depth-of-field lock screen image is 10, the corresponding value of Divide by Four, Remainder Three, such as 11, may be determined by using the foregoing second formula (2), and then the index information of the currently set theme depth-of-field lock screen image is modified from 10 to 11.

B3: Mark the modified index information as cacheid, and write the modified index information into the lightweight database.

In an example, for the operation, refer to the operation in step A3. Details are not described one by one in this embodiment of this application.

B4: Encapsulate the detailed information of the currently set theme depth-of-field lock screen image, where the detailed information includes at least the modified cacheid.

In an example, the detailed information of the theme depth-of-field lock screen image may further include image description information, a background image, and the like thereof. The image description information includes an application gadget, text information, and the like. When the currently set lock screen image is the theme depth-of-field lock screen image, a background image of the theme depth-of-field lock screen image may be obtained from a preset directory data/user_de/0/com.android.systemui/files.

In an example of this application, System UI may also encapsulate detailed information of the theme depth-of-field lock screen image into a data structure. Details are not described one by one in this embodiment of this application.

B5: Add the detailed information of the currently set theme depth-of-field lock screen image to the magazine lock screen data list.

In an example of this application, a specific implementation of adding the detailed information of the currently set theme depth-of-field lock screen image to the magazine lock screen data list may be: deleting the detailed information of the user-defined depth-of-field lock screen image from the magazine lock screen data list when the magazine lock screen data list includes the detailed information of the user-defined depth-of-field lock screen image, and adding the detailed information of the currently set theme depth-of-field lock screen image to a position at which the detailed information of the user-defined depth-of-field lock screen image is located before the deletion; and inserting the detailed information of the currently set theme depth-of-field lock screen image into the magazine lock screen data list when the magazine lock screen data list does not include the detailed information of the user-defined depth-of-field lock screen image. For example, a position may be randomly selected for insertion.

As an example rather than a limitation, System UI adds, by using a lock screen image processing module, the detailed information of the theme depth-of-field lock screen image to the magazine lock screen data list.

Optionally, there may be a plurality of user accounts that can log in to the electronic device. For example, the plurality of user accounts include a primary user account and a sub user account. The primary user account usually may be an owner of the electronic device, and the sub user account usually is not the owner of the electronic device, for example, may have only some of use permissions. In this case, before the detailed information of the theme depth-of-field lock screen image is added to the magazine lock screen data list, it may be further determined whether a currently logged-in user account is a sub user account. If the currently logged-in user account is not a sub user account, and the electronic device is not initialized currently, System UI adds the detailed information of the theme depth-of-field lock screen image to the magazine lock screen data list. Otherwise, if the currently logged-in user account is a sub user account, and/or the electronic device has been initialized, the subsequent procedure ends. In this way, security of the electronic device can be improved.

Step 913: Update a view page component, where the view page component is used for rendering to-be-displayed image data.

The view page (Viewpager) component is a view page flip tool, provides multi-page switching effect, and may be filled with a plurality of views by using a view adapter. A single view may be used for rendering image data of one lock screen image, to support the user in switching between different views when sliding left and right.

When the lock screen image is a depth-of-field lock screen image (such as a theme depth-of-field lock screen image or a user-defined depth-of-field lock screen image), the lock screen image includes a foreground image and a background image. Therefore, in an example of this application, the view page component includes a foreground view page component and a background view page component. The foreground view page component is used for rendering a foreground image of a to-be-displayed lock screen image, and the background view page component is used for rendering a background image of the to-be-displayed lock screen image. Therefore, when the view page component is updated, the background view page component and the foreground view page component are updated.

In an example of this application, in a case that the magazine lock screen function is enabled, when the currently set lock screen image is displayed on the lock screen, the user may slide left (or right) on the lock scree. In this case, a next (or previous) lock screen image of the currently set lock screen image in the magazine lock screen resource needs to be displayed. Therefore, to quickly respond to the slide operation of the user, during update, foreground images of three lock screen images may be simultaneously rendered in the foreground view page component, and background images of the three lock screen images may be rendered in the background view page component. That is, image data of each lock screen image among the currently set lock screen image, and the previous lock screen image and the next lock screen image of the currently set lock screen image in the magazine lock screen resource is cached respectively.

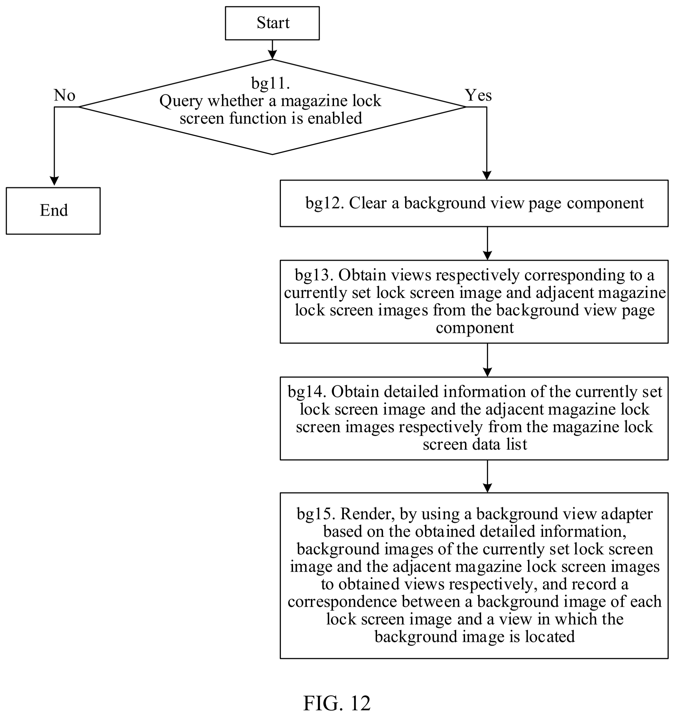

In an example of this application, refer to FIG. 12, in step 913, a procedure of updating a view in the background view page component may include the following operations: (Bg11) to (Bg15).

(Bg11) Query whether the magazine lock screen function is enabled.

During implementation, System UI may query a state of a magazine lock screen switch, to determine whether the magazine lock screen function is enabled. When the magazine lock screen switch is in an unlocked state, it is determined that the magazine lock screen function is enabled. Otherwise, when the magazine lock screen switch is in a locked state, it is determined that the magazine lock screen function is not enabled.

It should be noted that, the state of the magazine lock screen switch may be represented by using a switch identifier. When the switch identifier is a first preset identifier, it is determined that the magazine lock screen function is enabled, and when the switch identifier is a second preset identifier, it is determined that the magazine lock screen function is not enabled.

When the magazine lock screen function is enabled, System UI performs the following operation (Bg12). When the magazine lock screen function is not enabled, the procedure ends, that is, the following operation of Bg12 is not performed.

(Bg12) Clear the background view page component.

To be specific, image data of all previously rendered lock screen images in the background view page component is cleared. In addition, System UI further clears information cached in the background view adapter, to re-load a background image of each lock screen image among three to-be-displayed lock screen images. The background view adapter is configured to provide loading data for the background view page component.

Optionally, before the background view page component is cleared, it may be further determined whether there is a password for first power-on, and whether the lock screen is invisible. When there is a password for first power-on, subsequently after the lock screen is displayed, the lock screen does not display the magazine lock screen image when a left and right slide operation is received. Therefore, when there is a password for first power-on, the subsequent procedure does not need to be performed. When there is no password for first power-on, after the lock screen is displayed, the lock screen needs to display the magazine lock screen image when the left and right slide operation is received. Therefore, the operation of clearing the background view page component may be performed. In addition, when the lock screen is invisible, for example, when the lock screen is not displayed on a power-on welcome interface, the operation of clearing the background view page component may not be performed, but the operation of clearing the background view page component is performed when the lock screen is displayed (that is, the lock screen is visible).

(Bg13) Obtain views respectively corresponding to the currently set lock screen image and adjacent magazine lock screen images from the background view page component.

Each view is a view, and is used for displaying a background image of a corresponding lock screen image. A quantity of views included in the background view page component may be set according to requirements. For example, the background view page component includes view 1, view 2, view 3, view 4, and view 5, and view 1, view 2, and view 3 may be obtained in an update process.

(Bg14) Obtain detailed information of the currently set lock screen image and the adjacent magazine lock screen images respectively from the magazine lock screen data list.

It can be learned based on the foregoing descriptions that the currently set lock screen image may be a user-defined depth-of-field lock screen image or may be a theme depth-of-field lock screen image, and detailed information of the currently set lock screen image has been added to the magazine lock screen data list. Therefore, detailed information of the currently set lock screen image, detailed information of the previous lock screen image, and detailed information of the next lock screen image may be obtained from the magazine lock screen data list. In an example, System UI may obtain detailed information of the currently set lock screen image and the adjacent magazine lock screen images respectively from the magazine lock screen data list by using the background view adapter.

During implementation, the detailed information of the currently set lock screen image may be positioned in the magazine lock screen data list based on the currently set lock screen image, and System UI obtains, by using the background view adapter, the detailed information of the currently set lock screen image from the magazine lock screen data list based on the position. In addition, detailed information of a previous magazine lock screen image and detailed information of a next magazine lock screen image are obtained from the magazine lock screen data list, to obtain the detailed information of adjacent magazine lock screen images.

(Bg15) Render, by using the background view adapter based on the obtained detailed information, background images of the currently set lock screen image and the adjacent magazine lock screen images to obtained views respectively, and record a correspondence between a background image of each lock screen image and a view in which the background image is located.

For example, a background image carried in the detailed information of the currently set lock screen image is set in view 2 by using the background view adapter, and a correspondence between a view identifier of view 2 and index information of the currently set lock screen image is recorded; a background thumbnail carried in the detailed information of the previous magazine lock screen image of the currently set lock screen image is set in view 1 by using the background view adapter, and a correspondence between a view identifier of view 1 and index information of the previous magazine lock screen image is recorded; and a background thumbnail carried in the detailed information of the next magazine lock screen image of the currently set lock screen image is set in view 3 by using the background view adapter, and a correspondence between a view identifier of view 3 and index information of the next magazine lock screen image is recorded.

In this way, the background view page component is updated.

In an example of this application, when the background view page component is updated, System UI may further notify all interface elements of the lock screen, so that blur processing and the like are performed on the interface elements in the lock screen based on a lock screen image in the updated background view page component.

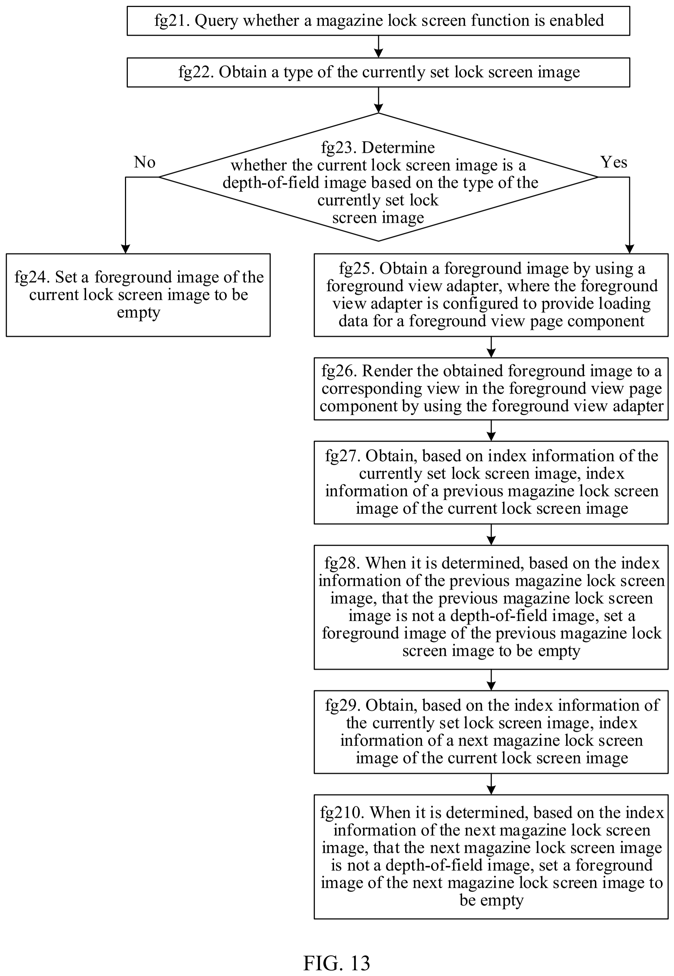

In an example of this application, refer to FIG. 13, in step 913, a procedure of updating a view in the foreground view page component may include the following operations: (Fg21) to (Fg210).

(Fg21) Query whether the magazine lock screen function is enabled.

When the magazine lock screen function is enabled, System UI performs the following operation (Fg22); otherwise, when the magazine lock screen function is not enabled, the procedure ends, that is, System UI does not perform the subsequent operation.

(Fg22) Obtain a type of the currently set lock screen image.

In a possible case, a theme depth-of-field lock screen image and a user-defined depth-of-field lock screen image may simultaneously exist in the magazine lock screen resource. For example, the user first sets the theme depth-of-field lock screen image, and then sets the user-defined depth-of-field lock screen image. In this case, to subsequently accurately determine whether the currently set lock screen image is the theme depth-of-field lock screen image or the user-defined depth-of-field lock screen image, System UI obtains the type of the currently set lock screen image.

It can be learned based on the foregoing descriptions that, the type of the currently set lock screen image is recorded in the lightweight database, and therefore, System UI may query the lightweight database for the type of the currently set lock screen image. When the lock screen image is a user-defined depth-of-field lock screen image, the obtained type of the lock screen image is 0, and when the lock screen image is a theme depth-of-field lock screen image, the obtained type of the lock screen image is 3.

Optionally, before the operation (Fg22) is performed, it may be further determined whether there is a password for first power-on currently, and whether the lock screen is invisible. When there is a password for first power-on, or the lock screen is invisible, the subsequent procedure may not be performed; otherwise, when there is no password for first power-on, and the lock screen is invisible, the operation of obtaining the type of the currently set lock screen image is performed.

(Fg23) Determine whether the current lock screen image is a depth-of-field image based on the type of the currently set lock screen image.

In a possible case, the type of the currently set lock screen image is 0. In this case, it indicates that the currently set lock screen image is a user-defined depth-of-field lock screen image, that is, it is determined that the current lock screen image is a depth-of-field image. In another possible case, the type of the currently set lock screen image is 3. In this case, it indicates that the currently set lock screen image is a theme depth-of-field lock screen image, that is, it is determined that the current lock screen image is a depth-of-field image. In still another possible case, the type of the currently set lock screen image is neither 0 nor 3. In this case, it is determined that the currently set lock screen image is not a depth-of-field image.

When the currently set lock screen image is not a depth-of-field image, the following operation (Fg24) is performed. Otherwise, when the currently set lock screen image is a depth-of-field image, the following operation (Fg25) is performed.

(Fg24) Set a foreground image of the current lock screen image to be empty.

To be specific, when the currently set lock screen image is not a depth-of-field image, it indicates that there is no foreground image in the currently set lock screen image. In this case, the foreground image of the current lock screen image may be set to be empty by using a foreground view adapter.

In an example of this application, three to-be-rendered views may be obtained from the foreground view page component. When the foreground image of the currently set lock screen image is empty, a correspondence between a view identifier of a blank view and index information of the currently set lock screen image may be recorded in the foreground view adapter.

In an example, if the currently set lock screen image includes image description information, the image description information may be added to a view corresponding to the currently set lock screen image.

As an example rather than a limitation, the foreground view adapter may obtain the index information of the currently set lock screen image from the background view adapter.

(Fg25) Obtain a foreground image by using a foreground view adapter, where the foreground view adapter is configured to provide loading data for a foreground view page component.

Because the foreground image in the lock screen directory is unique, when the currently set lock screen image is a depth-of-field image, the image may be directly taken from the lock screen directory, that is, an image named unlock_depth_effect_wallpaper_0.jpg is obtained.

(Fg26) Render the obtained foreground image to a corresponding view in the foreground view page component by using the foreground view adapter.

In an example, when the detailed information of the currently set lock screen image further includes image description information, the image description information may be rendered, by using the foreground view adapter, to an upper layer of a layer at which the foreground image is located.

In an example, after the foreground of the currently set lock screen image is rendered to the corresponding view in the foreground view page component, a correspondence between a view identifier of the rendered view and index information of the currently set lock screen image may be recorded by using the foreground view adapter.

(Fg27) Obtain, based on the index information of the currently set lock screen image, index information of the previous magazine lock screen image of the current lock screen image.

As an example rather than a limitation, the index information of the previous magazine lock screen image of the currently set lock screen image may be obtained from the background view adapter by using the foreground view adapter.

(Fg28) When it is determined, based on the index information of the previous magazine lock screen image, that the previous magazine lock screen image is not a depth-of-field image, set a foreground image of the previous magazine lock screen image to be empty.

In an example of this application, a previous view adjacent to a view at which the foreground image of the currently set lock screen image is located may be obtained from the foreground view page component, and a correspondence between the obtained view and the index information of the previous magazine lock screen image may be recorded, that is, the foreground image of the previous magazine lock screen image is recorded to be empty, that is, does not exist.

(Fg29) Obtain, based on the index information of the currently set lock screen image, index information of the next magazine lock screen image of the current lock screen image.

As an example rather than a limitation, the foreground view adapter may be used for obtaining the index information of the next magazine lock screen image of the currently set lock screen image from the background view adapter.

(Fg210) When it is determined, based on the index information of the next magazine lock screen image, that the next magazine lock screen image is not a depth-of-field image, set a foreground image of the next magazine lock screen image to be empty.

In an example of this application, a next view adjacent to a view at which the foreground image of the currently set lock screen image is located may be obtained from the foreground view page component, and a correspondence between the obtained view and the index information of the next magazine lock screen image may be recorded, that is, the foreground image of the next magazine lock screen image is recorded to be empty, that is, does not exist.

In this way, the foreground view page component is updated.

It should be noted that, operations in step (Bg11) to step (Bg15), and operations in step (Fg21) to step (Fg210) are all optional. In another example, to satisfy exception handling, a specific implementation of updating the view page component may not be limited to these steps. This is not limited in this embodiment of this application.

It should be noted that, in this embodiment of this application, an example in which when the set lock screen image is a depth-of-field lock screen image, a background image of the depth-of-field lock screen image is rendered to the background view page component is used for description. In another example, the detailed information of the depth-of-field lock screen image includes a background thumbnail. In this case, after obtaining the detailed information of the depth-of-field lock screen image, the background view adapter renders the background thumbnail included in the detailed information of the depth-of-field lock screen image to the background view page component. Then, in a screen-on display process, the background thumbnail may be first displayed, then a corresponding background image is obtained based on the index information of the depth-of-field lock screen image, and the displayed background thumbnail is replaced with the background image. In this way, real-time display performance is ensured, and a cache space of the background view page component is saved.

It should be noted that, in this embodiment of this application, an example in which image data of three lock screen images is simultaneously cached in a view page component is used for description. In another example, image data of more lock screen images may be simultaneously cached. For example, image data of five lock screen images may be simultaneously cached. This is not limited in this embodiment of this application.

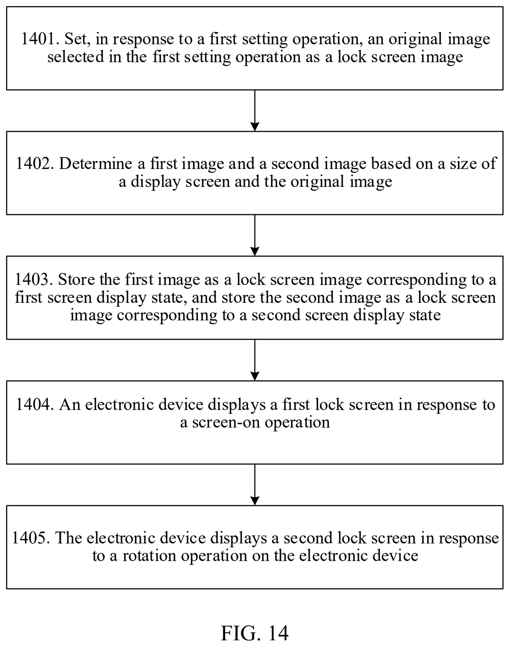

Based on the application scenario and the initialization operation provided in the foregoing embodiment, the method for displaying a lock screen image provided in the embodiments of this application is described below. Refer to FIG. 14. FIG. 14 is a schematic flowchart of a method for displaying a lock screen image according to an example embodiment. As an example rather than a limitation, that the method is applied to an electronic device is used as an example for description in FIG. 14. The method may include some or all of the following content.

Step 1401: Set, in response to a first setting operation, an original image selected in the first setting operation as a lock screen image.

It should be noted that, the first setting operation is an operation of setting an image such as a lock screen image or a home screen image as a depth-of-field image. The depth-of-field image is an image with a depth-of-field capability. The depth-of-field image includes a main image and a background image. When the depth-of-field image is displayed on a lock screen, the background image of the depth-of-field image is displayed on a lower layer of a layer at which the system time indicator is located, and a part of the system time indicators is located at a lower layer of the main image, that is, the main image covers some content of the system time indicator. For example, the scenario is shown in FIG. 4A, FIG. 4B, FIG. 4C, FIG. 4D, FIG. 4E, and FIG. 4F or FIG. 5A, FIG. 5B, FIG. 5C, and FIG. 5D.

To make display effect of the lock screen present a sense of depth, the user may usually set the lock screen image as a depth-of-field image. In addition, it can be learned from the above that, the user may set, by using Themes application or Gallery application, a selected original image as the lock screen image, where the original image is an image with a depth-of-field capability.

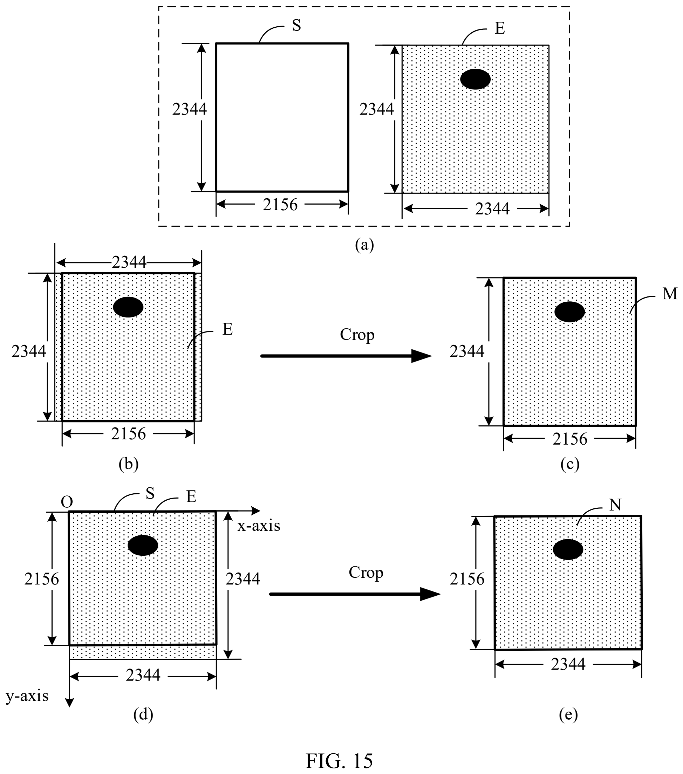

In an example, according to different manners of setting the depth-of-field image as the lock screen image, a size of the original image also varies. When the user performs setting by using Themes application, the original image is a depth-of-field image of a depth-of-field image theme, a shape of the original image is a square, a side length of the original image is the same as a longest side of the display screen, and the depth-of-field image theme is an image theme of the electronic device. For example, when a size of the display screen is 2156*2344, or when the size of the display screen is 2344*2156, the side length of the original image is 2344. That is, refer to (a) in FIG. 15, a size of original image E may be 2344*2344.

In an example, when the user performs setting by using Gallery application, the original image is an image (for example, an image with a depth-of-field capability) in a gallery of the electronic device. In this case, the size of the original image may be the same as the size of the display screen, or may be different from the size of the display screen. For example, the size of the display screen is 2156*2344, and the size of the original image is also 2156*2344. Alternatively, the size of the display screen is 2156*2344, and the size of the original image is 2156*2048, 2018*2344, 2506*2456, 2018*2048, or the like.

Step 1402: Determine a first image and a second image based on the size of the display screen and the original image.

Generally, a length of the display screen of the electronic device in a horizontal direction is different from a width of the display screen in a vertical direction. Therefore, when a display state of the electronic device is changed, the size of the lock screen image changes. In this case, the electronic device needs to determine a lock screen image displayed in a portrait display state and a lock screen image displayed in a landscape display state. In this embodiment of this application, the lock screen image displayed when the electronic device is in the portrait display state may be referred to as the first image, and the lock screen image displayed when the electronic device is in the landscape display state may be referred to as the second image. Alternatively, the lock screen image displayed when the electronic device is in the portrait display state is referred to as the first image, and the lock screen image displayed when the electronic device is in the landscape display state is referred to as the second image. In this embodiment of this application, an example in which the lock screen image displayed when the electronic device is in the portrait display state is referred to as the first image, and the lock screen image displayed when the electronic device is in the landscape display state is referred to as the second image is used for description. In addition, both the first image and the second image are determined based on a same image. When the original image is an image with a depth-of-field capability, both the first image and the second image are images with a depth-of-field capability. A length of the second image in a horizontal direction may be different from a length of the first image in a horizontal direction, and a width of the second image in a vertical direction may also be different from a width of the first image in a vertical direction.

It can be learned from FIG. 4A, FIG. 4B, FIG. 4C, FIG. 4D, FIG. 4E, FIG. 4F and FIG. 5A, FIG. 5B, FIG. 5C, FIG. 5D that, the depth-of-field image may be set to the lock screen image in different manners. In different setting manners, the size of the original image also varies. When the size of the original image varies, an operation in which the electronic device determines the first image and the second image based on the size of the display screen and the original image also varies.

Next, the operation in which the electronic device determines the first image and the second image based on the size of the display screen and the original image is described by using an example in which the original image is a depth-of-field image of the depth-of-field image theme.

In some embodiments, a length of the display screen of the electronic device in a horizontal direction is less than a width of the display screen in a vertical direction. In this case, when the display screen is in a first screen display state, center cropping is performed on the original image, to obtain the first image; coordinate information of a first cropping area of the original image is determined based on the size of the display screen, where the first cropping area is aligned with a top of the original image, and a size of the first cropping area is the same as a size of the display screen in a second screen display state; and the original image is cropped based on the coordinate information of the first cropping area, to obtain the second image.

It should be noted that, the first screen display state and the second screen display state are corresponding display states of the display screen before and after being rotated. In addition, the first screen display state may indicate that the display screen of the electronic device is in the portrait display state, and the second screen display state may indicate that the display screen of the electronic device is in the landscape display state. Alternatively, the first screen display state may indicate that the display screen of the electronic device is in the landscape display state, and the second screen display state may indicate that the display screen of the electronic device is in the portrait display state. This is not specifically limited in this embodiment of this application. In this embodiment of this application, an example in which the first screen display state is the portrait display state, and the second screen display state is the landscape display state is used for description.

When the original image is an image (a depth-of-field image) of the depth-of-field image theme, the original image is a square, and the side length is the same as the longest side of the display screen. Therefore, to adapt to the size of the display screen, the electronic device may perform center cropping on the original image. Further, because the length of the display screen in a horizontal direction is less than the width of the display screen in a vertical direction, the electronic device may perform center cropping on the original image in a horizontal direction based on the length of the display screen in a horizontal direction.

For example, refer to (a) in FIG. 15, a size of display screen S is 2156*2344, that is, a length of display screen S in a horizontal direction is 2156, and a width of display screen S in a vertical direction is 2344. In this case, refer to (a) in FIG. 15, a size of original image E may be 2344*2344. The electronic device performs center cropping on original image E. That is, refer to (b) in FIG. 15, a length of 2156 is reserved in the center of original image E in a horizontal direction, and redundant images on left and right sides are removed, to obtain first image M shown in (c) of FIG. 15.

Regardless of whether the display screen is in the first screen display state or the second screen display state, a distance between the system clock indicator and a top edge of the display screen in a vertical direction does not change. Therefore, to avoid a change of a relative position between a highest point of the main image and the system clock indicator, the electronic device needs to crop the original image in another cropping manner, to obtain the second image.

The original image is a square image, the first image is obtained by performing center cropping on the original image in a horizontal direction, and a distance between a main image in the first image and a top side of the first image remains unchanged relative to the original image. Therefore, the electronic device needs to ensure that a distance between a main image of the second image and a top side of the second image in a vertical direction remains unchanged relative to the first image, that is, the electronic device needs to ensure that the distance between the main image of the second image and the top side of the second image in a vertical direction remains unchanged relative to the original image. To achieve this objective, the electronic device may determine, based on the size of the display screen, coordinate information of a first cropping area of the original image, where the first cropping area is aligned with a top of the original image, and a size of the first cropping area is the same as a size of the display screen in the second screen display state.

In an example, the operation in which the electronic device determines, based on the size of the display screen, coordinate information of a first cropping area of the original image includes: determining upper-left corner coordinates of the original image as upper-left corner coordinates of the first cropping area, and determining upper-right corner coordinates of the original image as upper-right corner coordinates of the first cropping area; determining lower-left corner coordinates of the first cropping area based on the upper-left corner coordinates of the original image and a width, in a vertical direction, of the display screen in the second screen display state; and determining lower-right corner coordinates of the first cropping area based on the upper-right corner coordinates of the original image and the width, in a vertical direction, of the display screen in the second screen display state.

For example, when display screen S is in the second screen display state, that is, when display screen S is in the landscape display state, a size of display screen S is: a width of display screen S in a vertical direction is 2156, and a length of display screen S in a horizontal direction is 2344; and when a size of original image E is 2344*2344, refer to (d) in FIG. 15, a rectangular coordinate system is established by using an upper-left corner of original image E as an origin O of the rectangular coordinate system, a straight line in which a top border of original image E is located as an x-axis, a horizontal rightward direction as a positive direction of the x-axis, a straight line in which a left border of original image E is located as a y-axis, and a vertical downward direction as a positive direction of the y-axis. In this case, the first cropping area may be an area with bold lines in the figure, and coordinates of four corners of the first cropping area are respectively (0, 0), (2344, 0), (0, 2156), and (2344, 2156). The original image is cropped based on the coordinates of the four corners of the first cropping area, to obtain second image N shown in (e) of FIG. 15.

It should be noted that, the first cropping area is aligned with the top of the original image, and the size of the first cropping area is the same as the size of the display screen in the second screen display state, thereby ensuring that a relative position between the highest point of the main image on the lock screen and the system time indicator on the lock screen does not change in different display states of the display screen, thereby improving display effect of the depth-of-field image.

In some embodiments, when the display screen is in the first screen display state, if a length of the display screen in a horizontal direction is greater than a width of the display screen in a vertical direction, coordinate information of a second cropping area of the original image is determined based on the size of the display screen. The second cropping area is aligned with the top of the original image, and a size of the second cropping area is the same as a size of the display screen in the first screen display state; the original image is cropped based on the coordinate information of the second cropping area, to obtain the first image; and the original image is cropped based on the size of the display screen in a center cropping manner, to obtain the second image, where a size of the second image is the same as the size of the display screen in the second screen display state.

When the display screen is in the first screen display state, if the length of the display screen in a horizontal direction is greater than the width of the display screen in a vertical direction, the first image and the second image continue to be determined in the foregoing manner. This may cause the relative position between the highest point of the main image on the lock screen and the system time indicator on the lock screen to change when the display state of the display screen is changed. Therefore, when the display screen is in the first screen display state, and the length of the display screen in a horizontal direction is greater than the width of the display screen in a vertical direction, the electronic device needs to separately determine the first image and the second image in another manner.

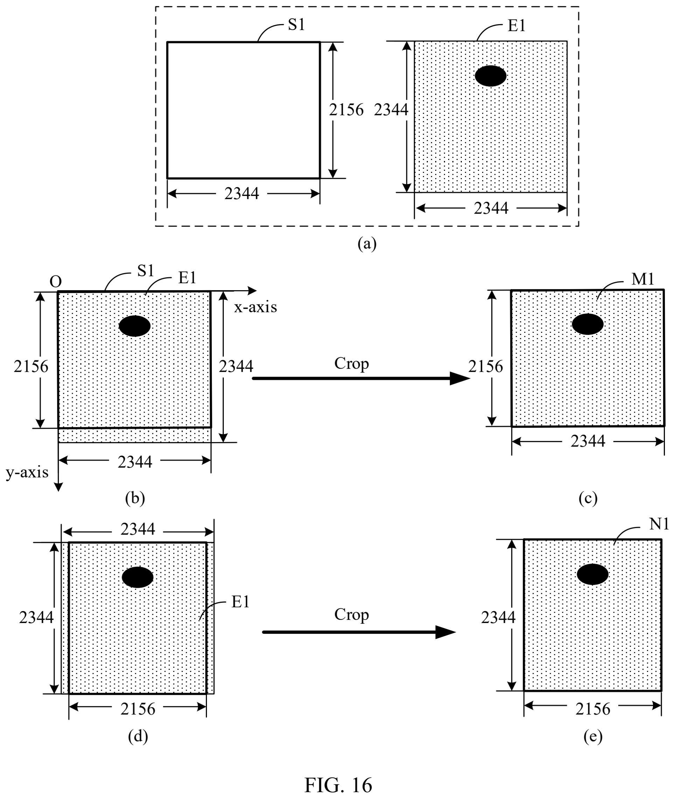

For example, refer to (a) in FIG. 16, a size of display screen S1 is 2344*2156, that is, when display screen S1 is in the first screen display state, a length of display screen S1 in a horizontal direction is 2344, a width of display screen S1 in a vertical direction is 2156, and a size of original image E1 may be 2344*2344; and refer to (b) in FIG. 16, when original image E1 is cropped, the electronic device establishes a rectangular coordinate system by using an upper-left corner of original image E1 as an origin O of the rectangular coordinate system, a straight line in which a top border of original image E1 is located as an x-axis, a horizontal rightward direction as a positive direction of the x-axis, a straight line in which a left border of original image E1 is located as a y-axis, and a vertical downward direction as a positive direction of the y-axis. In this case, the second cropping area may be an area with bold lines in the figure, and coordinates of four corners of the second cropping area are respectively (0, 0), (2344, 0), (0, 2156), and (2344, 2156). The original image is cropped based on the coordinates of the four corners of the first cropping area, to obtain first image M1 shown in (c) of FIG. 16. Next, center cropping continues to be performed on original image E1. Refer to (d) in FIG. 16, a length of 2156 is reserved in the center of original image E1 in a horizontal direction, and redundant images on left and right sides are removed, to obtain second image N1 shown in (e) of FIG. 16.

It should be noted that, for the manner in which the electronic device determines the coordinate information of the second cropping area of the original image based on the size of the display screen, refer to the foregoing manner in which the electronic device determines the coordinate information of the first cropping area of the original image based on the size of the display screen. Details are not described one by one in this embodiment of this application.

It should be noted that different cropping manners are used when the display screen is in different sizes. This improves image cropping flexibility, and enables cropping to be more targeted. In addition, when the display screen is in different display states, the relative position between the highest point of the main image on the lock screen and the system time indicator on the lock screen does not change, thereby improving display effect of the depth-of-field image.

When the display screen is a square, if the original image is a depth-of-field image of the depth-of-field image theme, the size of the original image is the size of the display screen. In this case, no matter how the display state of the display screen is switched, the relative position between the highest point of the main image in the lock screen image and the system time indicator on the lock screen does not change. Therefore, the electronic device may directly determine the original image as the first image and the second image.

Next, an example in which the original image is an image with a depth-of-field capability in a gallery of the electronic device is used for describing a manner in which the electronic device determines the first image and the second image based on the size of the display screen and the original image.

In a possible manner, when a shape of the display screen is not a square, a first image corresponding to the original image is determined based on the size of the display screen. A size of the first image is the same as the size of the display screen in the first screen display state; a long side of the display screen is divided by a short side of the display screen, to obtain enlargement times of the first image; the enlargement times is multiplied by a first distance, to obtain a second distance between a highest point of the main image in the enlarged first image and a top side of the enlarged first image in a vertical direction, where the first distance is a distance between a highest point of the main image in the first image and a top side of the first image in a vertical direction; and the enlarged first image is cropped based on the first distance, the size of the display screen, and the second distance, to obtain the second image, where a size of the second image is the same as the size of the display screen in the second screen display state.

When the shape of the display screen is not a square, the first screen display state and the second screen display state of the display screen are different. Therefore, the electronic device needs to determine the first image and the second image in different manners.

It can be learned from the above that, when the original image is an image with a depth-of-field capability in the gallery of the electronic device, a size of the original image may be the same as the size of the display screen, or may be different from the size of the display screen. When the size of the original image is the same as the size of the display screen in the first screen display state, the original image may be determined as the first image. When the size of the original image is different from the size of the display screen in the first screen display state, the first image corresponding to the original image may be determined based on the size of the display screen in a manner of displaying a lock screen image in the related technology. For example, when the length of the original image in a horizontal direction is greater than the length, in a horizontal direction, of the display screen in the first screen display state, and the width of the original image in a vertical direction is greater than the width, in a vertical direction, of the display screen in the first screen display state, the electronic device may perform center cropping on the original image based on the size of the display screen in the first screen display state, to obtain the first image. Alternatively, when the length of the original image in a horizontal direction is less than the length, in a horizontal direction, of the display screen in the first screen display state, and/or when the width of the original image in a vertical direction is less than the width, in a vertical direction, of the display screen in the first screen display state, the electronic device may enlarge the original image and perform center cropping on the enlarged original image, to obtain the first image. In this case, a size of the enlarged original image is greater than the size of the display screen in the first screen display state.

To avoid a change of the relative position between the highest point of the main image on the lock screen and the system time indicator on the lock screen when the display state of the display screen is changed, the electronic device may determine the second image based on the first image. In addition, the display screen is not a square, and after the display state of the display screen is changed, the size of the first image does not conform to a size of the display screen in the changed display state. Therefore, the electronic device may enlarge the first image and crop the enlarged first image. Enlargement times of the first image is a ratio of the long side of the display screen to the short side of the display screen. That is, the electronic device may divide the long side of the display screen by the short side of the display screen, to obtain the enlargement times of the first image.

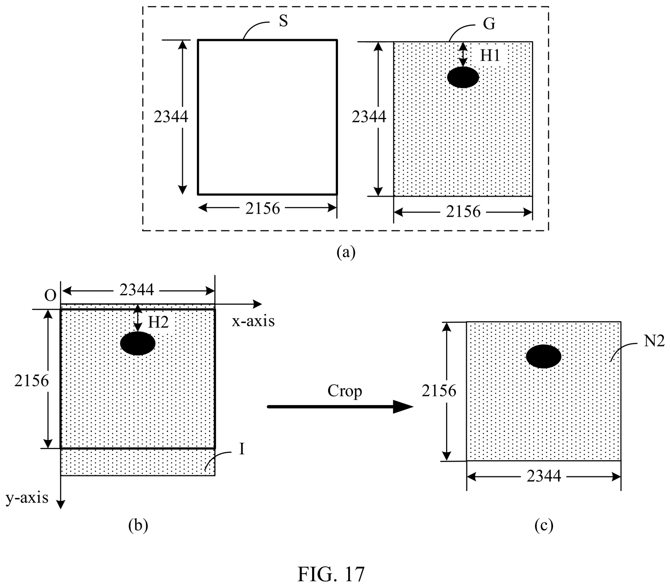

For example, refer to (a) in FIG. 17, when display screen S is in the first screen display state, a size of display screen S is 2156*2344, a size of first image G is also 2156*2344, and enlargement times of first image G is 2344/2156. The electronic device enlarges first image G based on the enlargement times, to obtain enlarged first image I shown in (b) of FIG. 16.

After first image G is enlarged, a distance between a target highest point in enlarged first image I and a top side of enlarged first image I in a vertical direction changes relative to that before enlargement. Therefore, to avoid a change of a relative position between a highest point of a main image in the second image and the system time indicator on the lock screen, the electronic device may crop enlarged first image I based on first distance H1, the size of the display screen, and second distance H2.

It should be noted that, the enlarged first image is cropped based on the first distance and the second distance, to ensure that when the second image obtained through cropping is displayed on the display screen in the second screen display state, the relative position between the highest point of the main image in the second image and the system time indicator on the lock screen does not change, thereby improving display effect of the depth-of-field image.

In some embodiments, the operation in which the electronic device crops the enlarged first image based on the first distance, the size of the display screen, and the second distance, to obtain the second image includes: subtracting the first distance from the second distance, to obtain a first difference; determining coordinate information of a third cropping area in the enlarged first image based on the first difference and the size of the display screen, where a size of the third cropping area is the same as the size of the display screen in the second screen display state; and cropping the enlarged first image based on the coordinate information of the third cropping area, to obtain the second image.

Because the second distance is an enlarged distance, the first distance may be subtracted from the second distance to obtain the first difference. For example, refer to (a) in FIG. 17 and (b) in FIG. 17, H1 is the first distance, H2 is the second distance, and the first difference is H2-H1.

In an example, the operation in which the electronic device determines coordinate information of a third cropping area in the enlarged first image based on the first difference and the size of the display screen includes: subtracting the first difference from an upper-left corner vertical coordinate of the enlarged first image, to obtain an upper-left corner vertical coordinate of the third cropping area, where an upper-left corner horizontal coordinate of the third cropping area is an upper-left corner horizontal coordinate of the enlarged first image; subtracting the first difference from an upper-right corner vertical coordinate of the enlarged first image, to obtain an upper-right corner vertical coordinate of the third cropping area, where an upper-right corner horizontal coordinate of the third cropping area is an upper-right corner horizontal coordinate of the enlarged first image; determining lower-left corner coordinates of the third cropping area based on the upper-left corner coordinates of the third cropping area and the width, in a vertical direction, of the display screen in the second screen display state; and determining lower-right corner coordinates of the third cropping area based on the upper-right corner coordinates of the third cropping area and the width, in a vertical direction, of the display screen in the second screen display state.

For example, when enlarged first image I is cropped, a size of display screen S in the second screen display state needs to be used, that is, a size of display screen S in a landscape display state needs to be used. When the display screen is in the landscape display state, the size of display screen S is: a width of the display screen in a vertical direction is 2156, and a length of the display screen in a horizontal direction is 2344. Refer to (b) in FIG. 17, a rectangular coordinate system is established by using an upper-left corner of enlarged first image I as an origin O of the rectangular coordinate system, a straight line in which a top border of enlarged first image I is located as an x-axis, a horizontal rightward direction as a positive direction of the x-axis, a straight line in which a left border of enlarged depth-of-field image I is located as a y-axis, and a vertical downward direction as a positive direction of the y-axis. In this case, the third cropping area may be an area with bold lines in the figure, and coordinates of four corners of the third cropping area are respectively (0, H2-H1), (2344, H2-H1), (0, H2-H1+2156), and (2344, H2-H1+2156). Enlarged first image I is cropped based on the coordinates of the four corners of the third cropping area, to obtain second image N2 shown in (c) of FIG. 17.

In some embodiments, manners in which the electronic device the enlarged first image based on the first distance, the size of the display screen, and the second distance may not only include the foregoing manners, but also include other manners. For example, the first difference may be a width of an area that needs to be cropped out in the enlarged first image. To ensure that the distance between the highest point of the main image in the second image and the top side of the second image in a vertical direction is the first distance, the electronic device may crop out, from top to bottom, an image area with a width of the first difference starting from a top side of the enlarged first image in a vertical direction. Then, an image area with a width of a target width in a vertical direction is reserved in the cropped first image, and a remaining image area is cropped out to obtain a second image, where the target width is a width in a vertical direction when the display screen is in the second screen display state.

It should be noted that, the coordinate information of the third cropping area is determined based on the first difference, so that the electronic device crops the enlarged first image more accurately, that is, the size of the obtained second image is more accurate. This ensures that the relative position between the highest point of the main image in the second image and the system time indicator on the lock screen does not change, and improves display effect of the depth-of-field image.

In another possible implementation, when a shape of the display screen is not a square, a first image corresponding to the original image is determined based on the size of the display screen. A size of the first image is the same as the size of the display screen in the first screen display state; a short side of the display screen is divided by a long side of the display screen, to obtain reduction times of the first image; the reduction times is multiplied by a first distance, to obtain a third distance between a highest point of the main image in the reduced first image and a top side of the reduced first image in a vertical direction, where the first distance is a distance between a highest point of the main image in the first image and a top side of the first image in a vertical direction; and the first image is cropped based on the reduction times, the third distance, the size of the display screen, and the first distance, to obtain the second image, where an enlarged size of the second image when displayed is the same as a size of the display screen in the second screen display state.

It should be noted that, for the operation in which the electronic device determines, based on the size of the display screen, the first image corresponding to the original image, refer to the foregoing described manners. Details are not described one by one in this embodiment of this application.

When a size of an image does not conform to the size of the display screen, to avoid incomplete display on the display screen, when the image is displayed, the image may be enlarged in size and displayed. Based on this principle, when the size of the first image does not conform to the size of the display screen in the second screen display state, the first image may be cropped to obtain the second image. When the second image is displayed on the display screen (the display screen is in the second screen display state), the second image will be displayed in an enlarged manner, and an enlarged size of the second image is exactly the same as the size of the display screen in the second screen display state.

Because the second image needs to be enlarged during display, the electronic device may crop the first image based on the reduction times. In an example, the operation in which the electronic device crops the first image based on the reduction times, the third distance, the size of the display screen, and the first distance, to obtain the second image includes: subtracting the third distance from the first distance, to obtain a second difference; multiplying the width, in a vertical direction, of the display screen in the second screen display state by the reduction times, to obtain a reduced width; determining coordinate information of a fourth cropping area in the first image based on the second difference and the reduced width, where an enlarged size of the fourth cropping area is the same as the size of the display screen in the second screen display state; and cropping the first image based on the coordinate information of the fourth cropping area, to obtain the second image.

It should be noted that, for the operation in which the electronic device determines coordinate information of the fourth cropping area based on the second difference and the reduced width, refer to the foregoing operation in which the electronic device determines coordinate information of the third cropping area in the enlarged first image based on the first difference and the size of the display screen. Details are not described one by one in this embodiment of this application.

It should be noted that, the first image is cropped based on the reduction times of the first image, and the first image does not need to be enlarged during a cropping process. This reduces operating steps, and improves cropping efficiency.

In still another possible implementation, when the shape of the display screen is a square, the first image corresponding to the original image is determined based on the size of the display screen; and the first image is determined as the second image.

When the shape of the display screen is a square, no matter how the display state of the display screen is switched, lock screen images displayed on the display screen are the same, that is, the relative position between the highest point of the main image in the lock screen image and the system time indicator on the lock screen does not change. Therefore, the electronic device may directly determine the first image as the second image.

It should be noted that, for the operation in which the electronic device determines, based on the size of the display screen, the first image corresponding to the original image, refer to the foregoing described manners. Details are not described one by one in this embodiment of this application.

Step 1403: Store the first image as a lock screen image corresponding to a first screen display state, and store the second image as a lock screen image corresponding to a second screen display state.

It should be noted that, the first image and the second image are stored, and when the first image or the second image needs to be used subsequently, a needed depth-of-field image can be quickly obtained, thereby improving image display efficiency.

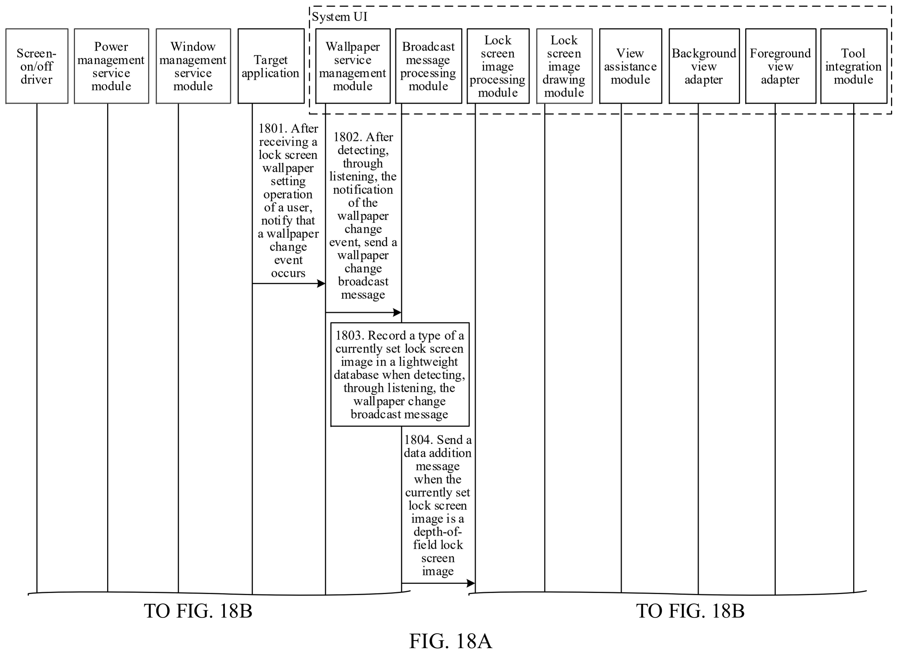

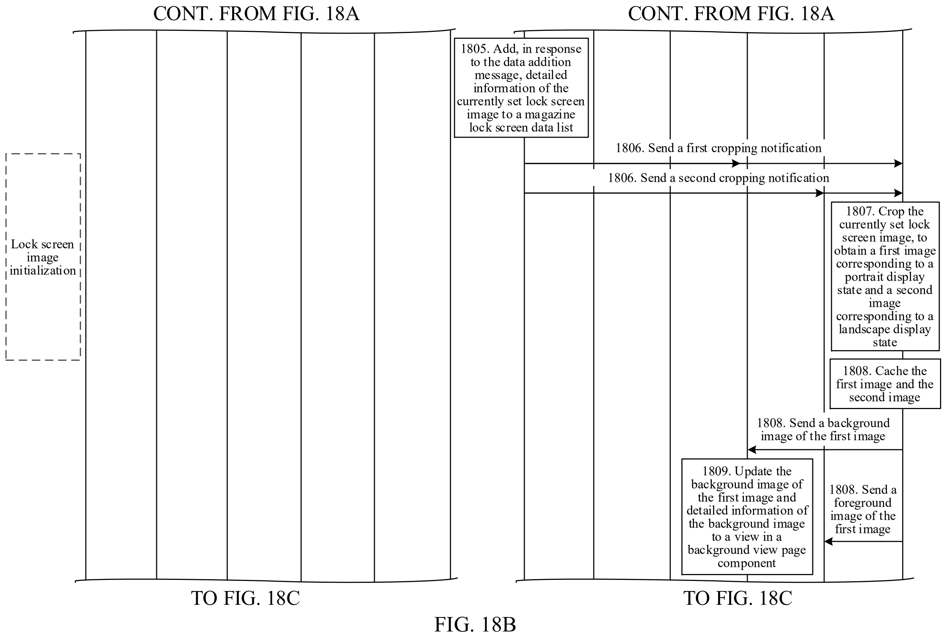

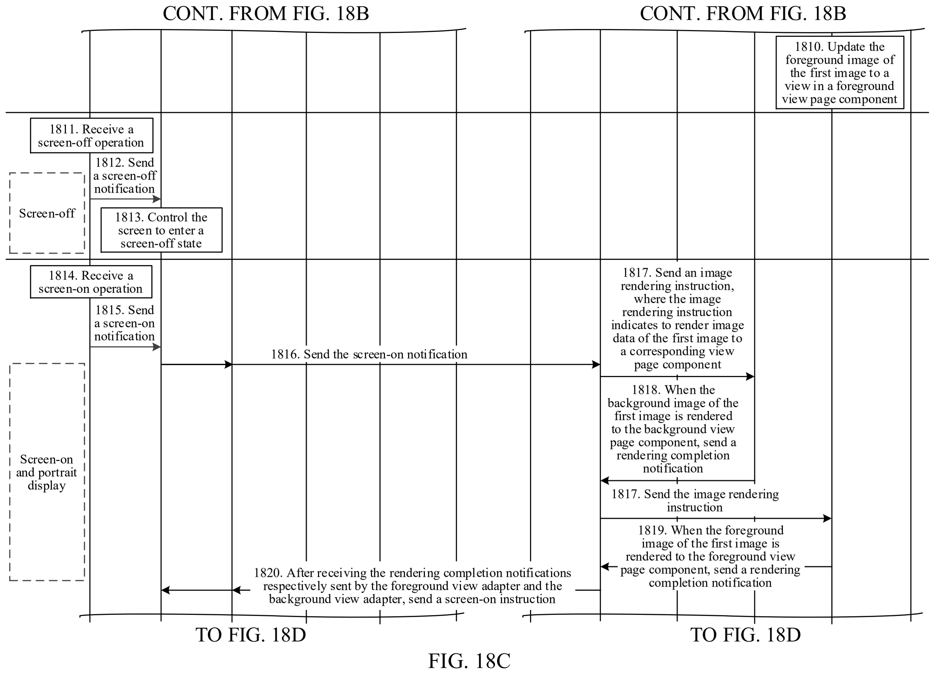

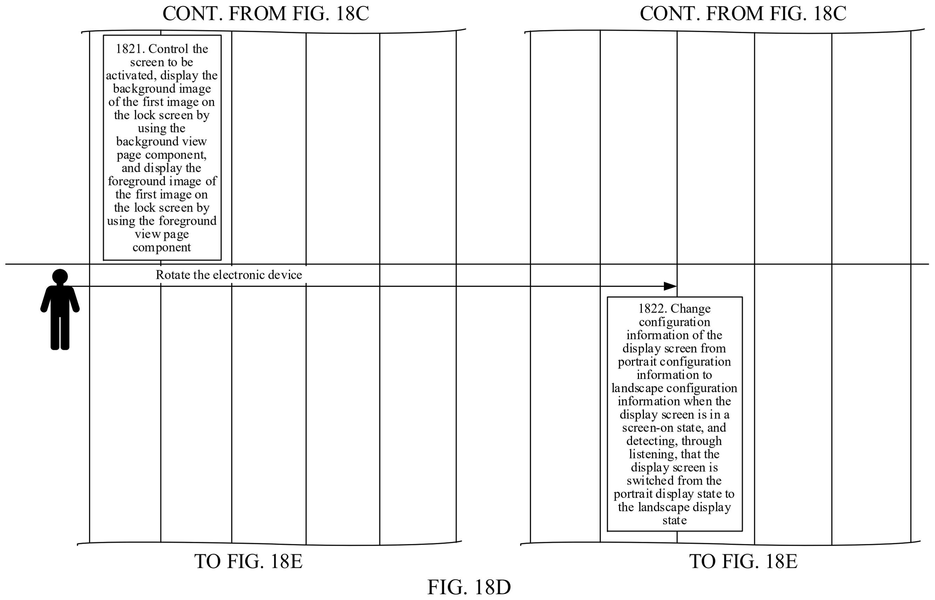

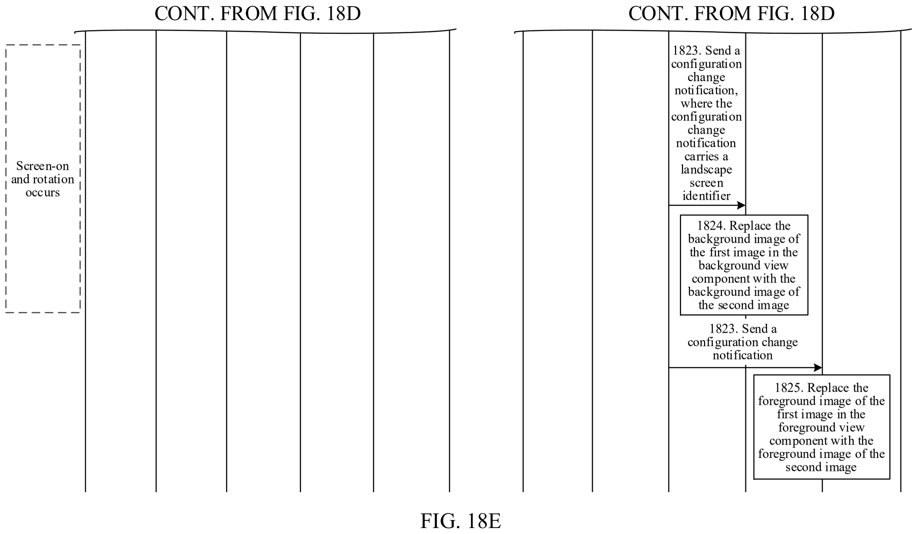

In some embodiments, the operations in step 1402 and step 1403 may be performed in a process in which System UI performs some initialization processing on display of the lock screen image. For example, refer to FIG. 18A, FIG. 18B, FIG. 18C, FIG. 18D, and FIG. 18E below. Certainly, after the electronic device enters the home screen from the lock screen, to save storage space, the electronic device may delete the stored first image and second image. To display a corresponding depth-of-field image based on a display state of a display screen when the lock screen is displayed next time, the electronic device may further perform the operations in step 1402 to step 1403 in a screen-off state.

In an example of this application, the electronic device may not only set the depth-of-field image as the lock screen image, but also set another static image as the lock screen image. For example, the electronic device sets a third image as a lock screen image in response to a second setting operation; and a third lock screen is displayed in response to a screen-on operation, where the third lock screen includes the third image and the system time indicator displayed on an upper layer of the third image. That is, when the third image is displayed on the lock screen, there is no image that may block the system time indicator.

Step 1404: The electronic device displays a first lock screen in response to a screen-on operation.

It should be noted that, the first lock screen includes: a first image, a system time indicator displayed on the first image, and a main image partially blocking the system time indicator. That is, when the first image is a depth-of-field image, the first lock screen includes a background image of the first image, the system time indicator displayed on the background image, and the main image partially blocking the system time indicator. For example, the scenario is shown in FIG. 3A.

It can be learned from the above that, the first image is a lock screen image corresponding to the first screen display state. Therefore, when the lock screen image of the electronic device is set to the depth-of-field image, and the display screen is in the first screen display state, in response to the screen-on operation, the electronic device may obtain the first image, and display the first image and the main image on the first lock screen.

In an example, the main image may be a foreground image in the first image. Certainly, in some examples, the main image may alternatively be another image. In this embodiment of this application, an example in which the main image is the foreground image of the first image is used for description.

It should be noted that, for the operation in which the electronic device displays the first lock screen in response to the screen-on operation, refer to the following operations in step 1814 to step 1821.

Step 1405: The electronic device displays a second lock screen in response to a rotation operation on the electronic device.

It should be noted that, the second lock screen includes: a second image, the system time indicator displayed on the second image, and the main image partially blocking the system time indicator, where a first position of the main image relative to the system time indicator in the first lock screen is the same as a second position of the main image relative to the system time indicator in the second lock screen.

In a process of using the electronic device, the user may change a display state of the display screen, for example, rotate the display screen from a portrait display state to a landscape display state. In this case, the electronic device may receive a rotation operation, that is, the rotation operation is an operation of switching the display state of the display screen. In response to the rotation operation, the electronic device may switch the display screen from the first screen display state to the second screen display state, that is, rotate from the first lock screen to the second lock screen, or rotate from a portrait screen to a landscape screen, and display the second image on the landscape screen.

In an example, that a first position of the main image relative to the system time indicator in the first lock screen is the same as a second position of the main image relative to the system time indicator in the second lock screen refers to: a fourth distance from a highest point of the main image to a top side of the system time indicator in the first lock screen is the same as a fifth distance from a highest point of the main image to a top side of the system time indicator in the second lock screen.

In an example, the operation in which the electronic device displays a second lock screen in response to a rotation operation on the electronic device may include: replacing the first image with the second image; and rotating the second image.

It should be further noted that, for a process in which the electronic device displays the second image, refer to the following operations in step 1822 to step 1825. Details are not described one by one in this embodiment of this application.

In this embodiment of this application, after the electronic device is rotated, the electronic device may switch from the first screen display state to the second screen display state, the lock screen image on the lock screen is updated from the first image to the second image, and a relative position between a highest point of the updated main image on the lock screen and the system time indicator on the lock screen does not change. Because the relative position between the highest point of the main image on the lock screen and the system clock indicator on the lock screen does not change before and after the display screen of the electronic device is rotated, the display effect of the depth-of-field image is ensured, and display aesthetics of the depth-of-field image is improved.

Based on the foregoing embodiment, the method for displaying a lock screen image provided in the embodiments of this application is described below. Herein, an example in which a lock screen image currently applied on the electronic device is a depth-of-field lock screen image is used for description. Refer to FIG. 18A, FIG. 18B, FIG. 18C, FIG. 18D, and FIG. 18E. FIG. 18A, FIG. 18B, FIG. 18C, FIG. 18D, and FIG. 18E are a schematic flowchart of a method for displaying a lock screen image according to an example embodiment. As an example rather than a limitation, the method may be performed by an electronic device, and interaction of a plurality of modules in the electronic device is used as an example for description in FIG. 18A, FIG. 18B, FIG. 18C, FIG. 18D, and FIG. 18E. The method may include some or all of the following content.

Step 1801: After receiving a lock screen wallpaper setting operation of a user, a target application notifies a wallpaper management service module that a wallpaper change event occurs.

Step 1802: After detecting, through listening, the notification of the wallpaper change event, the wallpaper management service module sends a wallpaper change broadcast message to a broadcast message processing module.

In an example of this application, the wallpaper change broadcast message carries first indication information, and the first indication information indicates that a currently set lock screen image is a theme lock screen image or a user-defined lock screen image.

It should be noted that, for the operation in which the wallpaper management service module sends the wallpaper change broadcast message to the broadcast message processing module, refer to the foregoing operations in FIG. 8 or step 901. Details are not described one by one in this embodiment of this application.

Step 1803: The broadcast message processing module records a type of the currently set lock screen image in a lightweight database when detecting, through listening, the wallpaper change broadcast message.

It should be noted that, for the operation in which the broadcast message processing module listens to the wallpaper change broadcast message, refer to the operation in step 901, and for the operation in which the broadcast message processing module records the type of the currently set lock screen image in the lightweight database, refer to the operations in step 902 to step 905 and step 907 to step 911. Details are also not described one by one in this embodiment of this application.

Step 1804: The broadcast message processing module sends a data addition message to a lock screen image processing module when the currently set lock screen image is a depth-of-field lock screen image.

It should be noted that, the data addition message indicates that the lock screen image processing module adds detailed information of the currently set lock screen image to a magazine lock screen data list.

Step 1805: The lock screen image processing module adds, in response to the data addition message, the detailed information of the currently set lock screen image to the magazine lock screen data list.

It should be noted that, when the currently set lock screen image is a user-defined depth-of-field lock screen image, for the operation in which the lock screen image processing module adds the detailed information of the currently set lock screen image to the magazine lock screen data list, refer to the operation in step 906. When the currently set field lock screen image is a theme depth-of-field lock screen image, for the operation in which the lock screen image processing module adds the currently set lock screen image to the magazine lock screen data list, refer to the operation in step 912. Details are not described one by one in this embodiment of this application.

Step 1806: The lock screen image processing module sends a first cropping notification to a tool integration module by using a background view adapter, and sends a second cropping notification to the tool integration module by using a foreground view adapter.

Step 1807: The tool integration module crops the currently set lock screen image, to obtain a first image corresponding to a portrait display state and a second image corresponding to a landscape display state.

It should be noted that, the tool integration module may crop an original image of the currently set lock screen image when receiving the first cropping notification and the second cropping notification. Alternatively, the tool integration module may crop a background image of the original image when receiving the first cropping notification and not receiving the second cropping notification, to obtain a background image of the first image and a background image of the second image. Alternatively, when the second cropping notification is received, and the first cropping notification is not received, a foreground image of the original image is cropped to obtain a foreground image of the first image and a foreground image of the second image.

In an example, the tool integration module may obtain the background image and the foreground image of the original image from a preset directory, and separately crop the background image and the foreground image of the original image.

In an example of this application, a specific implementation in which the tool integration module may obtain the background image of the original image based on index information may include: determining a type of the original image based on the index information, where the type of the original image includes a theme depth-of-field lock screen image or a user-defined depth-of-field lock screen image. For example, it is determined whether the index information is a value of Divide by Four, Remainder Three or a value of Divide by Four, Remainder Zero. If the original image is a theme depth-of-field lock screen image, that is, the index information is the value of Divide by Four, Remainder Three, the background image is obtained from a copied directory (that is, data/user_de/0/com.android.systemui/files). If the original image is a user-defined depth-of-field image, that is, the index information is the value of Divide by Four, Remainder Zero, the background image is obtained from a lock screen directory (that is, data/themes/0/wallpaper).

In an example, when a target depth-of-field lock screen image is a user-defined depth-of-field lock screen image, because a user-defined wallpaper framework stores a background image thereof, a lock screen image drawing module may further obtain the background image from the user-defined wallpaper framework.

It should be noted that, for the operation in which the tool integration module crops the original image, that is, the operation of determining the corresponding lock screen image of the display screen in the portrait display state and the corresponding lock screen image of the display screen in the landscape display state, refer to the operations in step 1402 and step 1403. Details are also not described one by one in this embodiment of this application.

In some embodiments, when the tool integration module receives the first cropping notification and/or the second cropping notification, if a magazine lock screen function is enabled, the tool integration module may not only crop the original image of the currently set lock screen image, but also crop a previous magazine lock screen image and a next magazine lock screen image.

Step 1808: The tool integration module caches the first image and the second image, sends the background image of the first image to the background view adapter, and sends the foreground image of the first image to the foreground view adapter.

It should be noted that, the background image and the foreground image of the first image carry a portrait screen identifier, and the background image and the foreground image of the second image carry a landscape screen identifier.

In an example, when cropping the previous magazine lock screen image and the next magazine lock screen image, the tool integration module may also cache the cropped magazine lock screen images, and send the cropped image corresponding to the portrait state to the background view adapter.

Step 1809: The background view adapter updates the background image of the first image and detailed information of the background image to a view in a background view page component.

When further receiving cropped images of the previous magazine lock screen image and the next magazine lock screen image corresponding to the first image, the background view adapter may not only update the background image of the first image and the detailed information of the background image to the view in the background view page component, but also update foreground images of the previous magazine lock screen image and the next magazine lock screen image to the background view page component.

Step 1810: The foreground view adapter updates the foreground image of the first image to a view in a foreground view page component.

It should be noted that, for the operation in which the background view adapter updates the background image of the first image and the detailed information of the background image to the view in the background view page component, refer to the operation of updating the view in the background view page component in step 913. For the operation in which the foreground view adapter updates the foreground image of the first image to a view in a foreground view page component, refer to the operation of updating the view in the background view page component recorded in the operation of step 913. Details are not described one by one in this embodiment of this application.

Step 1811: A screen-on/off driver receives a screen-off operation.

In an example, in a case that the electronic device is in a screen-on state, when detecting a trigger operation of the user on an on/off key of the electronic device, the screen-on/off driver determines that the screen-off operation is received.

Step 1812: The screen-on/off driver sends a screen-off notification to a power management service module.

To be specific, after detecting the screen-off operation, the screen-on/off driver notifies the power management service module of performing screen-off control.

Step 1813: The power management service module controls the screen to enter the screen-off state.

Step 1814: The screen-on/off driver receives a screen-on operation.

After the electronic device enters the screen-off state, when the user triggers screen-on of the electronic device, the screen-on/off driver receives the screen-on operation. For example, when detecting a trigger operation of the user on the on/off key of the electronic device, the screen-on/off driver determines that the screen-on operation is received.

Step 1815: The screen-on/off driver sends a screen-on notification to the power management service module.

To be specific, after detecting the screen-on operation, the screen-on/off driver notifies the power management service module of performing screen-on control.

Step 1816: The power management service module sends the screen-on notification to the lock screen image drawing module by using a window management service module.

In an example, as shown in FIG. 18A, FIG. 18B, FIG. 18C, FIG. 18D, and FIG. 18E, the power management service module sends the screen-on notification to the window management service module, and then the window management service module sends the screen-on notification to the lock screen image drawing module.

Step 1817: The lock screen image drawing module sends an image rendering instruction to the background view adapter and sends an image rendering instruction to the foreground view adapter, where the image rendering instruction indicates to render the image data of the first image to a corresponding view page component.

Step 1818: When the background image of the first image is rendered to the background view page component, the background view adapter sends a rendering completion notification to the lock screen image drawing module.

In a possible case, the background view adapter has completed rendering when receiving the image rendering instruction. In this case, the background view adapter sends the rendering completion notification to the lock screen image drawing module, to notify the lock screen image drawing module that the rendering operation is completed. In another possible case, the background view adapter does not complete rendering when receiving the image rendering instruction. In this case, the background view adapter continues to perform the rendering operation, and sends the rendering completion notification to the lock screen image drawing module when the rendering is completed.

Step 1819: When rendering the foreground image of the first image to the foreground view page component, the foreground view adapter sends the rendering completion notification to the lock screen image drawing module.

Similarly, in a possible case, the foreground view adapter has completed rendering when receiving the image rendering instruction. In this case, the foreground view adapter sends the rendering completion notification to the lock screen image drawing module, to notify the lock screen image drawing module that the rendering operation is completed. In another possible case, the foreground view adapter does not complete rendering when receiving the image rendering instruction. In this case, the foreground view adapter continues to perform the rendering operation, and sends the rendering completion notification to the lock screen image drawing module when the rendering is completed.

Step 1820: After receiving the rendering completion notifications respectively sent by the foreground view adapter and the background view adapter, the lock screen image drawing module sends a screen-on instruction to the power management service module by using the window management service module.

The lock screen image drawing module sends the screen-on instruction to the window management service module, and the window management service module forwards the screen-on instruction to the power management service module. The screen-on instruction indicates that drawing of a to-be-displayed lock screen image is completed.

Step 1821: The power management service module controls the screen to be activated, displays the background image of the first image on the lock screen by using the background view page component, and displays the foreground image of the first image on the lock screen by using the foreground view page component.

Because the background image of the first image is rendered to the background view page component, and the foreground image of the first image is rendered to the foreground view page component, after the power management service module activates the screen, the background image and the foreground image of the first image may be displayed on the lock screen.

Step 1822: A view assistance module changes configuration information of the display screen from portrait configuration information to landscape configuration information when the display screen is in the screen-on state, and the view assistance module detects, through listening, that the display screen is switched from the portrait display state to the landscape display state.

In an example, screen configuration change processing performed by the view assistance module includes performing a screen configuration change and loading an updated screen configuration. The view assistance module may perform the screen configuration change by using a performing change function, and may load the updated screen configuration by using a loading function. For example, the performing change function may be performConfigurationChange, and the loading function may be UpdateConfiguration.

Step 1823: The view assistance module sends a configuration change notification to the background view adapter and the foreground view adapter, where the configuration change notification carries the landscape screen identifier.

In an example, the view assistance module may send the configuration change message by using a transfer function, and the transfer function may be dispatchConfigurationChanged.

In an example, the view assistance module may send the configuration change notification to a view container (ViewGroup) by using the transfer function, and then the view container continues to separately send the configuration change notification to a first magazine switching module (MagazineSwitchViewPagerNoAnimation) and a second magazine switching module (MagazineSwitchViewPagerForeground) by using the transfer function. The first magazine switching module may send the configuration change notification to the background view adapter, and the second magazine switching module may send the configuration change notification to the foreground view adapter.

Step 1824: The background view adapter replaces the background image of the first image in the background view component with the background image of the second image when receiving the configuration change message.

Step 1825: The foreground view adapter replaces the foreground image of the first image in the foreground view component with the foreground image of the second image when receiving the configuration change message.

It should be noted that, for the operation in which the background view adapter updates the currently displayed background image, and the operation in which the foreground view adapter updates the currently displayed foreground image, also refer to the operation of displaying the first image recorded in step 1404. Details are not described one by one in this embodiment of this application.

In some embodiments, in a case that the magazine lock screen function is enabled, when receiving the configuration change message, the background view adapter may further update a previous magazine lock screen image and a next magazine lock screen image that are adjacent to the first image.

In this embodiment of this application, after the electronic device is rotated, the electronic device may switch from the first screen display state to the second screen display state, the lock screen image on the lock screen is updated from the first image to the second image, and a relative position between a highest point of the updated main image on the lock screen and the system time indicator on the lock screen does not change. Because the relative position between the highest point of the main image on the lock screen and the system clock indicator on the lock screen does not change before and after the display screen of the electronic device is rotated, the display effect of the depth-of-field image is ensured, and display aesthetics of the depth-of-field image is improved.

The following describes the electronic device in the embodiments of this application.

The method provided in the embodiments of this application may be performed by the electronic device, and the electronic device supports a screen rotation function. As an example rather than a limitation, the electronic device may be but is not limited to a tablet computer, a desktop computer, a laptop computer, a handheld computer, a notebook computer, a netbook, an augmented reality (augmented reality, AR)\virtual reality (virtual reality, VR) device, or a foldable mobile phone. This is not limited in this embodiment of this application.

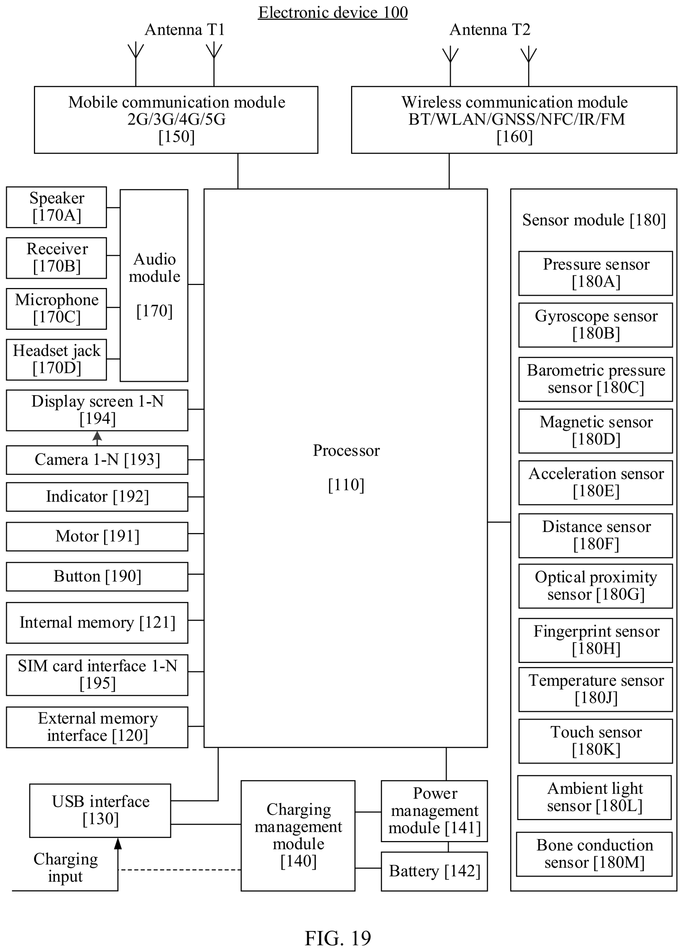

FIG. 19 is a schematic diagram of a structure of an electronic device according to an embodiment of this application. Refer to FIG. 19. The electronic device 100 may include a processor 110, an external memory interface 120, an internal memory 121, a universal serial bus (universal serial bus, USB) interface 130, a charging management module 140, a power management module 141, a battery 142, an antenna T1, an antenna T2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, some components may be combined, some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video encoder and decoder, a digital signal processor (digital signal processor, DSP), a baseband processor, and/or a neural-network processing unit (neural-network processing unit, NPU), and the like. Different processing units may be separate devices, or may be integrated to one or more processors.

The controller may be a nerve center and a command center of the electronic device 100. The controller may generate an operation control signal based on an instruction operation code and a time sequence signal, to complete control of instruction fetching and instruction executing.

A memory may be further disposed in the processor 110, and is configured to store an instruction and data. In some embodiments, the memory in the processor 110 is a cache. The memory may store instructions or data recently used or cyclically used by the processor 110. If the processor 110 needs to use the instructions or data again, the processor 110 may directly invoke the instructions or data from the memory. This avoids repeated access, and reduces a waiting time of the processor 110, so that system efficiency is improved.

In some embodiments, the processor 110 may include one or more interfaces, for example, may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, and the like.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computation, and render an image. The processor 110 may include one or more GPUs, and the GPUs execute a program instruction to generate or change display information.

The external memory interface 120 may be configured to connect to an external storage card such as a Micro SD card, to expand a storage capability of the electronic device 100. The external storage card communicates with the processor 110 by using the external memory interface 120, to implement a data storage function, for example, storing a file such as a music or a video in the external storage card.

The internal memory 121 may be configured to store computer-executable program code, and the computer-executable program code includes instructions. The processor 110 performs various functional applications and data processing of the electronic device 100 by running the instructions stored in the internal memory 121. The internal memory 121 may include a program storage area and a data storage area. The program storage area may store an operating system, an application required by at least one function (such as a voice playing function and an image playing function), and the like. The data storage area may store data (such as audio data and a phone book), and the like created when the electronic device 100 is used. In addition, the internal memory 121 may include a high-speed random access memory, and may also include a non-volatile memory, for example, at least one magnetic disk storage device, a flash storage device, or a universal flash storage (universal flash storage, UFS).

The acceleration sensor 180E may detect magnitudes of accelerations of the electronic device 100 in various directions (usually on three axes). When the electronic device 100 is still, a magnitude and a direction of gravity may be detected. The acceleration sensor 180E may be further configured to identify a posture of the electronic device 100, and is applied to applications such as landscape/portrait orientation switching and a pedometer.

The touch sensor 180K is also referred to as a "touch panel". The touch sensor 180K may be disposed on the display screen 194, and the touch sensor 180K and the display screen 194 form a touchscreen, which is also referred to as a "touch control screen". The touch sensor 180K is configured to detect a touch operation performed on or near the touch sensor 180K. The touch sensor 180K may transmit the detected touch operation to the application processor, to determine a touch event type. A visual output related to the touch operation may be provided through the display screen 194. In some other embodiments, the touch sensor 180K may alternatively be disposed on a surface of the electronic device 100 at a position different from that of the display screen 194.

All or some of the foregoing embodiments may be implemented by software, hardware, firmware, or any combination thereof. When the software is used to implement the embodiments, all or some of the embodiments may be implemented in a form of a computer program product. The computer program product includes one or more computer instructions. When the computer instructions are loaded and executed on the computer, all or some of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device such as a server or a data center integrating one or more usable media. The usable medium may be a magnetic medium (for example, a floppy disk, a hard disk drive, or a magnetic tape), an optical medium (for example, a digital versatile disc (Digital Versatile Disc, DVD)), a semiconductor medium (for example, a solid state disk (Solid State Disk, SSD)), or the like.

The foregoing descriptions are optional embodiments provided in this application, but are not intended to limit this application. Any modification, equivalent replacement, improvement, or the like made within the technical scope disclosed in this application shall fall within the protection scope of this application.

**Claims**

1. A method for displaying a lock screen image, wherein the method is applied to an electronic device, and comprises:

   displaying, by the electronic device, a first lock screen in response to a screen-on operation, wherein the first lock screen comprises: a first image, a system time indicator displayed on the first image, and a main image partially blocking the system time indicator; and
   displaying, by the electronic device, a second lock screen in response to a rotation operation on the electronic device, wherein the second lock screen comprises: a second image, the system time indicator displayed on the second image, and the main image partially blocking the system time indicator, wherein
   a first position of the main image relative to the system time indicator in the first lock screen is the same as a second position of the main image relative to the system time indicator in the second lock screen.

2. The method according to claim 1, wherein before the displaying, by the electronic device, a first lock screen in response to a screen-on operation, the method further comprises:

   setting, in response to a first setting operation, an original image selected in the first setting operation as a lock screen image;
   determining the first image and the second image based on a size of a display screen of the electronic device and the original image; and
   storing the first image as a lock screen image corresponding to a first screen display state, and storing the second image as a lock screen image corresponding to a second screen display state, wherein the first screen display state and the second screen display state are corresponding display states of the display screen before and after being rotated.

3. The method according to claim 2, wherein a length of the display screen in a horizontal direction is less than a width of the display screen in a vertical direction, the original image is an image of a depth-of-field image theme, a shape of the original image is a square, a side length of the original image is the same as a longest side of the display screen, and the depth-of-field image theme is an image theme of the electronic device; and
the determining the first image and the second image based on a size of a display screen of the electronic device and the original image comprises:

when the display screen is in the first screen display state, performing center cropping on the original image, to obtain the first image;
determining coordinate information of a first cropping area of the original image based on the size of the display screen, wherein the first cropping area is aligned with a top of the original image, and a size of the first cropping area is the same as a size of the display screen in the second screen display state; and
cropping the original image based on the coordinate information of the first cropping area, to obtain the second image.

4. The method according to claim 2, wherein a length of the display screen in a horizontal direction is greater than a width of the display screen in a vertical direction, the original image is an image of a depth-of-field image theme, a shape of the original image is a square, a side length of the original image is the same as a longest side of the display screen, and the depth-of-field image theme is an image theme of the electronic device; and
the determining the first image and the second image based on a size of a display screen of the electronic device and the original image comprises:

when the display screen is in the first screen display state, determining coordinate information of a second cropping area of the original image based on the size of the display screen, wherein the second cropping area is aligned with a top of the original image, and a size of the second cropping area is the same as a size of the display screen in the first screen display state;
cropping the original image based on the coordinate information of the second cropping area, to obtain the first image; and

cropping the original image based on the size of the display screen in a center cropping manner, to obtain the second image, wherein a size of the second image is the same as a size of the display screen in the second screen display state.

5. The method according to claim 2, wherein a shape of the display screen is not a square, and the original image is an image in a gallery of the electronic device; and
the determining the first image and the second image based on a size of a display screen of the electronic device and the original image comprises:

determining the first image corresponding to the original image based on the size of the display screen, wherein a size of the first image is the same as a size of the display screen in the first screen display state;
dividing a long side of the display screen by a short side of the display screen, to obtain enlargement times of the first image;
multiplying the enlargement times by a first distance, to obtain a second distance between a highest point of the main image in the enlarged first image and a top side of the enlarged first image in a vertical direction, wherein the first distance is a distance between a highest point of the main image in the first image and a top side of the first image in a vertical direction; and
cropping the enlarged first image based on the first distance, the size of the display screen, and the second distance, to obtain the second image, wherein a size of the second image is the same as a size of the display screen in the second screen display state.

6. The method according to claim 5, wherein the cropping the enlarged first image based on the first distance, the size of the display screen, and the second distance, to obtain the second image comprises:

subtracting the first distance from the second distance, to obtain a first difference;
determining coordinate information of a third cropping area in the enlarged first image based on the first difference and the size of the display screen, wherein a size of the third cropping area is the same as the size of the display screen in the second screen display state; and
cropping the enlarged first image based on the coordinate information of the third cropping area, to obtain the second image.

7. The method according to claim 2, wherein a shape of the display screen is not a square, and the original image is an image in a gallery of the electronic device; and

the determining the first image and the second image based on a size of a display screen of the electronic device and the original image comprises:

    determining the first image corresponding to the original image based on the size of the display screen, wherein a size of the first image is the same as a size of the display screen in the first screen display state;
    dividing a short side of the display screen by a long side of the display screen, to obtain reduction times of the first image;
    multiplying the reduction times by a first distance, to obtain a third distance between a highest point of the main image in the reduced first image and a top side of the reduced first image in a vertical direction, wherein the first distance is a distance between a highest point of the main image in the first image and a top side of the first image in a vertical direction; and
    cropping the first image based on the reduction times, the third distance, the size of the display screen, and the first distance, to obtain the second image, wherein an enlarged size of the second image when displayed is the same as a size of the display screen in the second screen display state.

8. The method according to claim 2, wherein a shape of the display screen is a square, and the original image is an image in a gallery of the electronic device; and the determining the first image and the second image based on a size of a display screen of the electronic device and the original image comprises:

    determining the first image corresponding to the original image based on the size of the display screen; and
    determining the first image as the second image.

9. The method according to claim 1, wherein the displaying, by the electronic device, a second lock screen in response to a rotation operation on the electronic device comprises:

    replacing, in response to the rotation operation on the electronic device, the first image with the second image; and
    rotating the second image.

10. The method according to claim 1, wherein that a first position of the main image relative to the system time indicator in the first lock screen is the same as a second position of the main image relative to the system time indicator in the second lock screen refers to: a fourth distance from a highest point of the main image to a top side of the system time indicator in the first lock screen is the same as a fifth distance from a highest point of the main image to a top side of the system time indicator in the second lock screen.

11. The method according to claim 1, wherein the method further comprises:

    setting a third image as a lock screen image in response to a second setting operation; and
    displaying a third lock screen in response to the screen-on operation, wherein the third lock screen comprises the third image and the system time indicator displayed on an upper layer of the third image.

12. An electronic device, wherein a structure of the electronic device comprises a processor and a memory; and
the memory is configured to store a program that supports the electronic device in performing the method according to any one of claims 1 to 11.

13. A computer-readable storage medium, wherein the computer-readable storage medium stores instructions, and when the instructions are run on a computer, the computer is enabled to perform the method according to any one of claims 1 to 11.

FIG. 1

FIG. 2A

FIG. 2B

EP 4 657 227 A1

FIG. 3B

FIG. 3A

FIG. 4A

FIG. 4B

EP 4 657 227 A1

**C2**

8:00

Settings

🔍 Search settings

🛜 WLAN Connected ›

✳️ Bluetooth Closed ›

🔀 Mobile network ›

Ⓗ Smart interconnection ›

⊙ More connections ›

🖼️ Wallpaper ›

🔔 Display and brightness ›

5G 5G 🛜 🔋

Home screen and wallpaper

Themes     Magazine screen

Wallpaper     Screen-off display

09:00

Home screen settings ›

Home screen style     Standard style ›

Lock screen signature     123 ›

**FIG. 4C**

**C3**

8:00

Settings

🔍 Search settings

🛜 WLAN Connected ›

✳️ Bluetooth Closed ›

🔀 Mobile network ›

Ⓗ Smart interconnection ›

⊙ More connections ›

🖼️ Wallpaper ›

🔔 Display and brightness ›

5G 5G 🛜 🔋

‹ Themes

Character (depth of field)     Wallpaper (dynamic)

Forest (dynamic)     Stars (dynamic)

**FIG. 4D**

EP 4 657 227 A1

FIG. 4E

FIG. 4F

EP 4 657 227 A1

8:00  5G ۱۱۱ 5G ۱۱۱ 📶 ▬

File Management

E-mail

Music

Calculator

Videos

Sports and Health

Weather

Browser

Gallery

Settings

Recorder

App Store

Camera

Contacts

Phone

Messages

**FIG. 5A**

H    C5

8:00  5G ۱۱۱ 5G ۱۱۱ 📶 ▬

Preview

Select  • • •

Gallery    Photos    Search

**FIG. 5B**

FIG. 5C

FIG. 5D

EP 4 657 227 A1

EP 4 657 227 A1

**8:00**     5G📶 5G📶 📶 🔋

Preview     ( Select ) •••

| | |
|---|---|
| Copy | 🗐 |
| Share | 🖧 |
| Use as wallpaper | ☐ |
| Favorite | ♡ |
| Add to Photos | 🗁 |
| Delete | ✗ |

Gallery    Photos    Search

FIG. 6A

TO
FIG. 6B

TO
FIG. 6D

C7

8:00  5G 5G 📶 🔋

Preview                              Select  •••

Depth-of-field
effect display

Static effect
display

Gallery          Photos          Search

CONT.
FROM
FIG.
6A

FIG. 6B

8:00  5G 5G 📶 🔋

🔒 Slide to unlock
Thursday, June 8

08:00

A

FIG. 6C

EP 4 657 227 A1

C7

8:00     5G 5G 📶📶 🛜 🔋

Preview     (Select) •••

Depth-of-field
effect display

Static effect
display

CONT.
FROM
FIG.
6A

Gallery    Photos    Search

FIG. 6D

8:00     5G 5G 📶📶 🛜 🔋

🔒 Slide to unlock
Thursday, June 8
**08:00**

A

FIG. 6E

| Application layer | System application | | | | Gallery |
| | Broadcast message processing module | Lock screen image processing module | Background view adapter | Lock screen image drawing module | Themes |
| | View assistance module | Tool integration module | Foreground view adapter | | ... |

| Application framework layer | Wallpaper management service module | Power management service module | Window management service module | ... |

| System layer | Surface manager | Three-dimensional graphics processing library | Android runtime |
| | Two-dimensional graphics engine | Media library | ... | |

| Kernel layer | Display driver | Camera driver | Screen-on/off driver |
| | Audio driver | Sensor driver | ... |

FIG. 7

Lock screen directory

Themes application

Decompress and store

Store

Gallery application

Wallpaper management service module

Wallpaper change broadcast message

Theme change message

System UI

FIG. 8

901. Receive a wallpaper change broadcast message

902. After the wallpaper change broadcast message is received, determine whether the system is currently restarted

No — 903. Determine whether a currently set lock screen image is a user-defined lock screen image

Yes — 908. Determine whether the currently set lock screen image is a static image

903. Determine whether a currently set lock screen image is a user-defined lock screen image

No → 908. Determine whether the currently set lock screen image is a static image

No → End

Yes ↓

904. Determine whether a currently set user-defined lock screen image is with a depth-of-field capability

No → No → 907. Mark a type of the currently set lock screen image as –1, and end a depth-of-field processing procedure

909. Determine whether the currently set lock screen image is with a depth-of-field capability

Yes ↓

905. Mark the type of the currently set lock screen image as 0

910. Determine whether the currently set lock screen image is a user-defined depth-of-field lock screen image

Yes →

906. Add detailed information of the user-defined depth-of-field lock screen image to a magazine lock screen data list

No ↓

911. Mark the type of the currently set lock screen image as 3

912. Add detailed information of the theme depth-of-field lock screen image to the magazine lock screen data list

913. Update a view page component, where the view page component is used for rendering to-be-displayed image data

FIG. 9

A1. Modify index information of a currently set user-defined depth-of-field lock screen image according to a principle of Divide by Four, Remainder Zero

↓

A2. Mark the modified index information as cacheid

↓

A3. Encapsulate detailed information of the currently set user-defined depth-of-field lock screen image, where the detailed information includes at least the modified cacheid

↓

A4. Add the detailed information of the currently set user-defined depth-of-field lock screen image to a magazine lock screen data list, where the magazine lock screen data list includes detailed information of each of a plurality of magazine lock screen images

FIG. 10

B1. Copy a background image in a lock screen directory to another preset directory

↓

B2. Modify index information of a currently set theme depth-of-field lock screen image according to a principle of Divide by Four, Remainder Three

↓

B3. Mark the modified index information as cacheid

↓

B4. Encapsulate detailed information of the currently set theme depth-of-field lock screen image, where the detailed information includes at least the modified cacheid

↓

B5. Add the detailed information of the currently set theme depth-of-field lock screen image to a magazine lock screen data list

FIG. 11

Start

bg11.
Query whether a magazine lock
screen function is enabled

No          Yes

End

bg12. Clear a background view page component

bg13. Obtain views respectively corresponding to a currently set lock screen image and adjacent magazine lock screen images from the background view page component

bg14. Obtain detailed information of the currently set lock screen image and the adjacent magazine lock screen images respectively from the magazine lock screen data list

bg15. Render, by using a background view adapter based on the obtained detailed information, background images of the currently set lock screen image and the adjacent magazine lock screen images to obtained views respectively, and record a correspondence between a background image of each lock screen image and a view in which the background image is located

FIG. 12

fg21. Query whether a magazine lock screen function is enabled

fg22. Obtain a type of the currently set lock screen image

fg23. Determine whether the current lock screen image is a depth-of-field image based on the type of the currently set lock screen image

No

Yes

fg24. Set a foreground image of the current lock screen image to be empty

fg25. Obtain a foreground image by using a foreground view adapter, where the foreground view adapter is configured to provide loading data for a foreground view page component

fg26. Render the obtained foreground image to a corresponding view in the foreground view page component by using the foreground view adapter

fg27. Obtain, based on index information of the currently set lock screen image, index information of a previous magazine lock screen image of the current lock screen image

fg28. When it is determined, based on the index information of the previous magazine lock screen image, that the previous magazine lock screen image is not a depth-of-field image, set a foreground image of the previous magazine lock screen image to be empty

fg29. Obtain, based on the index information of the currently set lock screen image, index information of a next magazine lock screen image of the current lock screen image

fg210. When it is determined, based on the index information of the next magazine lock screen image, that the next magazine lock screen image is not a depth-of-field image, set a foreground image of the next magazine lock screen image to be empty

FIG. 13

1401. Set, in response to a first setting operation, an original image selected in the first setting operation as a lock screen image

↓

1402. Determine a first image and a second image based on a size of a display screen and the original image

↓

1403. Store the first image as a lock screen image corresponding to a first screen display state, and store the second image as a lock screen image corresponding to a second screen display state

↓

1404. An electronic device displays a first lock screen in response to a screen-on operation

↓

1405. The electronic device displays a second lock screen in response to a rotation operation on the electronic device

FIG. 14

FIG. 15

FIG. 16

FIG. 17

EP 4 657 227 A1

| Screen-on/off driver | Power management service module | Window management service module | Target application | System UI | | | | | | | |
| --- | --- | --- | --- | --- | --- | --- | --- | --- | --- | --- | --- |
| | | | | Wallpaper service management module | Broadcast message processing module | Lock screen image processing module | Lock screen image drawing module | View assistance module | Background view adapter | Foreground view adapter | Tool integration module |

1801. After receiving a lock screen wallpaper setting operation of a user, notify that a wallpaper change event occurs

1802. After detecting, through listening, the notification of the wallpaper change event, send a wallpaper change broadcast message

1803. Record a type of a currently set lock screen image in a lightweight database when detecting, through listening, the wallpaper change broadcast message

1804. Send a data addition message when the currently set lock screen image is a depth-of-field lock screen image

TO FIG. 18B

TO FIG. 18B

FIG. 18A

1805. Add, in response to the data addition message, detailed information of the currently set lock screen image to a magazine lock screen data list

1806. Send a first cropping notification

1806. Send a second cropping notification

Lock screen image initialization

1807. Crop the currently set lock screen image, to obtain a first image corresponding to a portrait display state and a second image corresponding to a landscape display state

1808. Cache the first image and the second image

1808. Send a background image of the first image

1809. Update the background image of the first image and detailed information of the background image to a view in a background view page component

1808. Send a foreground image of the first image

EP 4 657 227 A1

TO FIG. 18C　　　　　　　　TO FIG. 18C

FIG. 18B

1810. Update the foreground image of the first image to a view in a foreground view page component

1811. Receive a screen-off operation

1812. Send a screen-off notification

Screen-off

1813. Control the screen to enter a screen-off state

1814. Receive a screen-on operation

1815. Send a screen-on notification

1817. Send an image rendering instruction, where the image rendering instruction indicates to render image data of the first image to a corresponding view page component

1816. Send the screen-on notification

1818. When the background image of the first image is rendered to the background view page component, send a rendering completion notification

Screen-on and portrait display

1817. Send the image rendering instruction

1819. When the foreground image of the first image is rendered to the foreground view page component, send a rendering completion notification

1820. After receiving the rendering completion notifications respectively sent by the foreground view adapter and the background view adapter, send a screen-on instruction

FIG. 18C

EP 4 657 227 A1

1821. Control the screen to be activated, display the background image of the first image on the lock screen by using the background view page component, and display the foreground image of the first image on the lock screen by using the foreground view page component

Rotate the electronic device

1822. Change configuration information of the display screen from portrait configuration information to landscape configuration information when the display screen is in a screen-on state, and detecting, through listening, that the display screen is switched from the portrait display state to the landscape display state

TO FIG. 18E

TO FIG. 18E

FIG. 18D

EP 4 657 227 A1

Screen-on and rotation occurs

1823. Send a configuration change notification, where the configuration change notification carries a landscape screen identifier

1824. Replace the background image of the first image in the background view component with the background image of the second image

1823. Send a configuration change notification

1825. Replace the foreground image of the first image in the foreground view component with the foreground image of the second image

FIG. 18E

EP 4 657 227 A1

Electronic device 100

Antenna T1                                    Antenna T2

| Mobile communication module<br>2G/3G/4G/5G<br>[150] | Wireless communication module<br>BT/WLAN/GNSS/NFC/IR/FM<br>[160] |

Speaker
[170A]

Receiver
[170B]

Microphone
[170C]

Headset jack
[170D]

Audio
module
[170]

Display screen 1-N
[194]

Camera 1-N [193]

Indicator [192]

Motor [191]

Button [190]

Internal memory [121]

SIM card interface 1-N
[195]

External memory
interface [120]

Processor
[110]

Sensor module [180]

Pressure sensor
[180A]

Gyroscope sensor
[180B]

Barometric pressure
sensor [180C]

Magnetic sensor
[180D]

Acceleration sensor
[180E]

Distance sensor
[180F]

Optical proximity
sensor [180G]

Fingerprint sensor
[180H]

Temperature sensor
[180J]

Touch sensor
[180K]

Ambient light
sensor [180L]

Bone conduction
sensor [180M]

USB interface
[130]

Charging
input

Charging
management
module
[140]

Power
management
module [141]

Battery [142]

FIG. 19

**INTERNATIONAL SEARCH REPORT**

| International application No. |
|---|
| **PCT/CN2024/079319** |

| A. | CLASSIFICATION OF SUBJECT MATTER |
|---|---|

G06F3/04845(2022.01)i

According to International Patent Classification (IPC) or to both national classification and IPC

| B. | FIELDS SEARCHED |
|---|---|

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 百度, BAIDU; IEEE: 壁纸, 墙纸, 锁屏, 图像, 景深, 前景, 背景, 旋转, 倾斜, 横屏, 时间, 时钟, 遮, 重叠, 覆盖, 裁剪, 剪裁, wallpaper, lock screen, image, depth of field, foreground, background, rotate, incline, landscape, time, clock, mask, overlap, cover, cut

| C. | DOCUMENTS CONSIDERED TO BE RELEVANT |
|---|---|

| Category* | Citation of document, with indication, where appropriate, of the relevant passages | Relevant to claim No. |
|---|---|---|
| X | 如风-小虾米 (Non-official translation: Rufeng-Xiaoxiami). "ios16景深效果 (Non-official translation: IOS 16 Depth of Field Effect)" <br> *bilibili, [online], [search date 2024-05-21]. searched on internet: https://www.bilibili.com/video/BV1Ve4y1y7vh/*, 14 September 2022 (2022-09-14), <br> seconds 9-27 | 1-2, 8-13 |
| X | TASTER. "ikun哭死! (Non-official translation: Ikun Kusi!) iOS 16景深壁纸太好用了! (Non-official translation: IOS 16 Depth of Field Wallpaper is Useful) 真的和CXK很搭! (Non-official translation: It Goes Well with CXK)" <br> *bilibili, [online], [search date 2024-05-21]. searched on internet: https://www.bilibili.com/video/BV1Hg411Y7tM/*, 06 October 2022 (2022-10-06), <br> seconds 7-17 | 1-2, 8-13 |
| A | CN 109151206 A (VIVO MOBILE COMMUNICATION CO., LTD.) 04 January 2019 (2019-01-04) <br> description, paragraphs 56-180 | 1-13 |

| ☑ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 May 2024** | **24 May 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/079319** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 108932145 A (GUANGZHOU JIUBANG CENTURY TECHNOLOGY CO., LTD.) 04 December 2018 (2018-12-04)<br>entire document | 1-13 |
| A | US 2018246635 A1 (MICROSOFT TECHNOLOGY LICENSING, LLC) 30 August 2018 (2018-08-30)<br>entire document | 1-13 |

Form PCT/ISA/210 (second sheet) (July 2022)

## INTERNATIONAL SEARCH REPORT
### Information on patent family members

International application No.

**PCT/CN2024/079319**

| Patent document cited in search report | | | Publication date (day/month/year) | Patent family member(s) | Publication date (day/month/year) |
|---|---|---|---|---|---|
| CN | 109151206 | A | 04 January 2019 | None | |
| CN | 108932145 | A | 04 December 2018 | None | |
| US | 2018246635 | A1 | 30 August 2018 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310972715